(19)

Europäisches Patentamt
European Patent Office
Office européen des brevets

(11)  **EP 4 456 569 A1**

(12)  **EUROPEAN PATENT APPLICATION**
published in accordance with Art. 153(4) EPC

(43) Date of publication:
**30.10.2024  Bulletin 2024/44**

(21) Application number: **22910065.6**

(22) Date of filing: **21.12.2022**

(51) International Patent Classification (IPC):
**H04W 4/02** (2018.01)  **H04W 64/00** (2009.01)
**G01S 5/02** (2010.01)  **G01S 13/06** (2006.01)

(52) Cooperative Patent Classification (CPC):
**G01S 5/02; G01S 13/06; H04W 4/02; H04W 64/00;
Y02D 30/70**

(86) International application number:
**PCT/CN2022/140652**

(87) International publication number:
**WO 2023/116753 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **24.12.2021  CN 202111602656**

(71) Applicant: **VIVO MOBILE COMMUNICATION CO.,
LTD.
Dongguan, Guangdong 523863 (CN)**

(72) Inventors:
• **LI, Jianzhi
Dongguan, Guangdong 523863 (CN)**

• **JIANG, Dajie
Dongguan, Guangdong 523863 (CN)**
• **YUAN, Yannan
Dongguan, Guangdong 523863 (CN)**
• **DING, Shengli
Dongguan, Guangdong 523863 (CN)**
• **YAO, Jian
Dongguan, Guangdong 523863 (CN)**
• **WU, Jianming
Dongguan, Guangdong 523863 (CN)**

(74) Representative: **Lavoix
Bayerstraße 83
80335 München (DE)**

(54)  **POSITIONING SENSING METHOD AND APPARATUS, AND RELATED DEVICE**

(57)  This application relates to the field of communication technologies. Disclosed are a positioning sensing method and apparatus, and a related device. The positioning sensing method in embodiments of this application includes: performing, by a first sensing device, azimuth power spectrum APS measurement on a sensing target, to obtain a first APS measurement result of a dynamic reflection path of a first signal, the first APS measurement result being used for determining a positioning result of the sensing target; and performing, by the first sensing device, a first operation or a second operation based on the first APS measurement result, where the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

| A first sensing device performs azimuth power spectrum APS measurement on a sensing target, to obtain a first APS measurement result of a dynamic reflection path of a first signal | 401 |
| The first sensing device performs a first operation or a second operation based on the first APS measurement result | 402 |

FIG. 4

**Description**

**CROSS-REFERENCE TO RELATED APPLICATIONS**

This application claims priority to Chinese Patent Application No. 202111602656.7 filed in China on December 24, 2021, which is incorporated herein by reference in its entirety.

**TECHNICAL FIELD**

This application relates to the field of mobile communication technologies, and in particular, to a positioning sensing method and apparatus, and a related device.

**BACKGROUND**

With the development of communication technologies, in addition to a wireless communication capability, a further communication system further has a wireless sensing capability. For example, a communication device may perform sensing measurement in a manner such as active sensing, passive sensing, or interactive sensing. However, a current sensing target on which sensing positioning is performed is usually a terminal, and positioning on a sensing target of a non-terminal is unclear. In view of this, in the related art, there is a problem that an application range of sensing positioning is relatively narrow.

**SUMMARY**

Embodiments of this application provide a positioning sensing method and apparatus, and a related device, which are applicable to sensing positioning on a non-terminal, improving an application range of sensing positioning sensing.
According to a first aspect, a positioning sensing method is provided, including:

performing, by a first sensing device, azimuth power spectrum (azimuth power spectrum, APS) measurement on a sensing target, to obtain a first APS measurement result of a dynamic reflection path of a first signal, the first APS measurement result being used for determining a positioning result of the sensing target; and
performing, by the first sensing device, a first operation or a second operation based on the first APS measurement result, where
the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

According to a second aspect, a positioning sensing method is provided, including:

receiving, by a core network device, at least two APS measurement results, each APS measurement result being an APS measurement result that is of a dynamic reflection path of a first signal and that is obtained by a sensing device by performing azimuth power spectrum APS measurement on a sensing target; and
determining, by the core network device, a positioning result of the sensing target according to the at least two APS measurement results.

According to a third aspect, a positioning sensing apparatus is provided, including:

a measurement module, configured to perform azimuth power spectrum APS measurement on a sensing target, to obtain a first APS measurement result of a dynamic reflection path of a first signal, the first APS measurement result being used for determining a positioning result of the sensing target; and
an execution module, configured to perform a first operation or a second operation based on the first APS measurement result, where
the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

According to a fourth aspect, a positioning sensing apparatus is provided, including:

a receiving module, configured to receive at least two APS measurement results, each APS measurement result being an APS measurement result that is of a dynamic reflection path of a first signal and that is obtained by a sensing device by performing azimuth power spectrum APS measurement on a sensing target; and
a first determining module, configured to determine a positioning result of the sensing target according to the at least two APS measurement results.

According to a fifth aspect, a terminal is provided, including a processor and a memory, the memory storing a program or instructions executable on the processor, the program or instructions, when executed by the processor, implementing the steps of the method according to the first aspect.

According to a sixth aspect, a terminal is provided, including a processor and a communication interface, where the communication interface is configured to perform azimuth power spectrum APS measurement on a sensing target, to obtain a first APS measurement result of a dynamic reflection path of a first signal, the first APS measurement result being used for determining a positioning result of the sensing target; and the processor is configured to perform a first operation or a second operation based on the first APS measurement result, where the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

According to a seventh aspect, a network side device is provided, including a processor and a memory, the memory storing a program or instructions executable on the processor, the program or instructions, when executed by the processor, implementing the steps of the method according to the second aspect.

According to an eighth aspect, a network side device is provided, including a processor and a communication interface, where the communication interface is configured to receive at least two APS measurement results, each APS measurement result being an APS measurement result that is of a dynamic reflection path of a first signal and that is obtained by a sensing device by performing azimuth power spectrum APS measurement on a sensing target; and the processor is configured to determine a positioning result of the sensing target according to the at least two APS measurement results.

According to a ninth aspect, a readable storage medium is provided, the readable storage medium storing a program or instructions, the program or instructions, when executed by the processor, implementing the steps of the method according to the first aspect or the steps of the method according to the second aspect.

According to a tenth aspect, a chip is provided, including a processor and a communication interface, the communication interface being coupled to the processor, and the processor being configured to run a program or instructions to implement the method according to the first aspect or the method according to the second aspect.

According to an eleventh aspect, a computer program product is provided, the computer program product being stored in a non-transient readable storage medium, and the computer program product being executed by at least one processor to implement the method according to the first aspect or the method according to the second aspect.

In the embodiments of this application, azimuth power spectrum APS measurement is performed on a sensing target to obtain a first APS measurement result of a dynamic reflection path of a first signal, the first APS measurement result being used for determining a positioning result of the sensing target; and a first operation or a second operation is performed based on the first APS measurement result. In this way, at least two sensing devices jointly obtain an APS measurement result of the dynamic reflection path of the first signal to determine the positioning result of the sensing target, so that the sensing target can implement positioning without having a function of receiving and sending signals, thereby improving an application range of sensing positioning.

## BRIEF DESCRIPTION OF THE DRAWINGS

FIG. 1 is a block diagram of a wireless communication system to which an embodiment of this application is applicable;
FIG. 2 is a first diagram of an NR positioning architecture;
FIG. 3 is a second diagram of an NR positioning architecture;
FIG. 4 is a flowchart of a positioning sensing method according to an embodiment of this application;
FIG. 5 is a first schematic diagram of a positioning sensing scenario to which an embodiment of this application is applicable;

FIG. 6 is a second schematic diagram of a positioning sensing scenario to which an embodiment of this application is applicable;
FIG. 7 is a flowchart of another positioning sensing method according to an embodiment of this application;
FIG. 8 is a structural diagram of a positioning sensing apparatus according to an embodiment of this application;
FIG. 9 is a structural diagram of another positioning sensing apparatus according to an embodiment of this application;
FIG. 10 is a structural diagram of a communication device according to an embodiment of this application;
FIG. 11 is a structural diagram of a terminal according to an embodiment of this application;
FIG. 12 is a first structural diagram of a network side device according to an embodiment of this application; and
FIG. 13 is a second structural diagram of a network side device according to an embodiment of this application.

## DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated obj ects.

It is to be noted that, the technologies described in the embodiments of this application are not limited to a long term evolution (long term evolution, LTE)/LTE-Advanced (LTE-advanced, LTE-A) system, or may be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and another system. In the embodiments of this application, the terms "system" and "network" are usually interchangeably used, and the technology described herein can be applied to the systems and radio technologies mentioned above, and can also be applied to other systems and radio technologies. Although the technologies are also applicable to applications other than NR system applications, for example, a 6th generation (6th Generation, 6G) communication system, a new radio (new radio, NR) system is exemplarily described in the following descriptions, and the term "NR" is used in most of the following descriptions.

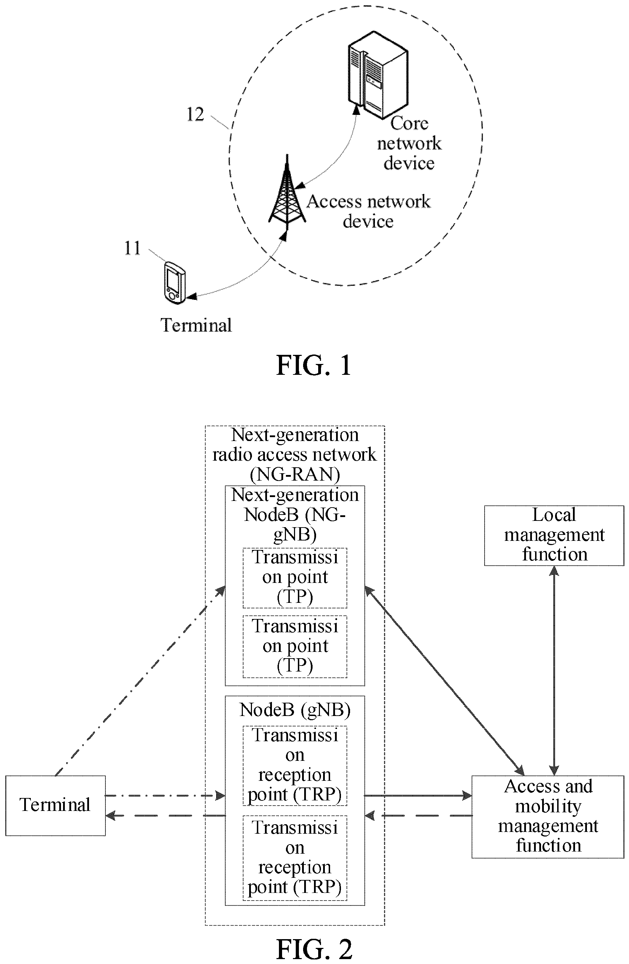

FIG. 1 shows a block diagram of a wireless communication system to which an embodiment of this application is applicable. The communication system includes a terminal 11 and a network side device 12. The terminal 11 may be a terminal side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (a wearable device), a vehicle user equipment (vehicle user equipment, VUE), a pedestrian user equipment (pedestrian user equipment, PUE), a smart household (which is a household device having a wireless communication function, for example, a refrigerator, a television, a washing machine, or furniture), a game console, a personal computer (personal computer, PC), a teller machine, self-service machine, or the like. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, and the like. It is to be noted that, a specific type of the terminal 11 is not limited in the embodiments of this application. The network side device 12 may include an access network device or a core network device. The access network device 12 may also be referred to as a radio access network device, a radio access network (radio access network, RAN), a radio access network function, or a radio access network unit. The access network device 12 may include a base station, a wireless local area network (wireless local area network, WLAN) access point, a wireless fidelity (wireless fidelity, Wi-Fi) node, or the like. The base station may be referred to as a node B, an evolved node B (evolved node B, eNB), an access point, a base transceiver station (base transceiver station, BTS), a radio base station, a radio transceiver, a basic service set (basic service set, BSS), an extended service set (extended service set, ESS), a home node B, a home evolved node B, a transmitting receiving point (transmitting receiving point, TRP), or another suitable term in the field. The base station is not limited to a specific technical term as long as the same technical effect is achieved. It is to be noted that, in the embodiments of this application, the base station in the NR system is only used as an example for description, but a specific type of the base station is not limited. The core network device may include, but not limited to at least one of the following: a core network node, a core network function, a mobility management entity (mobility management entity, MME), an access and mobility management function (access and mobility management function, AMF), a session management function (session management function, SMF), a user plane function (user plane function, UPF), a policy control function (policy control function, PCF), a policy and charging rules function (policy and charging rules function, PCRF), an edge application server discovery function (edge application server discovery function, EASDF), a unified data management (unified data management, UDM), a unified data repository (unified data repository, UDR), a home subscriber server (home subscriber server, HSS), centralized network configuration (centralized network configuration, CNC), a network repository function (network repository function, NRF), a network exposure function (network exposure function, NEF), a local NEF (local NEF, or L-NEF), a binding support function (binding support function, BSF), an application function (application function, AF), and the like. It is to be noted that, in the embodiments of this application, the core network device in the NR system is only used as an example for description, but a specific type of the core network device is not limited.

For ease of understanding, content involved in the embodiments of this application is described below.

Accurate and real-time position information is an important requirement for various new network services, for example, an emergency service, Internet of Vehicles device, and industrial Internet of Things (industrial Internet of Things, IIoT). The positioning technology has been researched for many years. A position of a device may be estimated by using measuring a cellular radio signal through a wireless device. In recent years, researchers have become increasingly interested in positioning by using a cellular technology due to expectations for higher positioning precision in an NR network and emergence of more new use cases. Positioning solutions usually depends on a time-based technology, an angle-based technology, or a mixed technology. In the 3rd generation partnership project (3rd generation partnership project, 3GPP) Release 16 (Release 16, R16), an LTE positioning function has been further expanded in NR, which benefits from various enabling factors of NR, for example, larger bandwidth, higher frequency, more antennas, a low delay, and a flexible network architecture. A 5th generation (5th generation, 5G) positioning architecture is based on an LTE positioning architecture, and in the positioning architecture, additional modification is performed after a new logical node is introduced in a 5G core (5G core, 5GC).

For a positioning architecture of an NG radio access network (NG radio access network, NG-RAN) in 3GPP R16 shown in FIG. 2, the architecture is suitable for positioning a terminal accessed by an NR gNB transmission reception point (transmission reception point, TRP) or a transmission point (transmission point, TP) of an enhanced evolved universal terrestrial radio access network (evolved universal terrestrial radio access network, E-UTRAN) (that is, an LTE ng-eNB).

Signaling between different entities in the 5G positioning architecture has respective protocol requirements. The gNB (gNB-CU)/ng-eNB exchanges necessary positioning and measurement information by using a new radio positioning protocol annex (new radio positioning protocol annex, NRPPa) protocol and a location management function (location management function, LMF) in the 5GC. In LTE, positioning support between the terminal and a location server is processed by using an LTE positioning protocol (LTE positioning protocol, LPP). The protocol has been expanded in NR and is used for supporting signaling interaction between a user equipment (user equipment, UE) and the LMF. In addition, the terminal receives, through an NR-Uu or LTE-Uu interface, necessary wireless configuration information from an NG-RAN node in a manner of radio resource control (radio resource control, RRC). The LPP is reused in NR, and the 4th Generation (4th Generation, 4G) and 5G may be expanded in a common protocol. Both the NRPPa protocol and the LPP are transmitted on a control plane of an NG interface (the next generation control plane (the next generation control plane, NG-C)) through an access and mobility management function (access and mobility management function, AMF). 4G is the 4th generation mobile communication system, and 5G is the 5th generation mobile communication system.

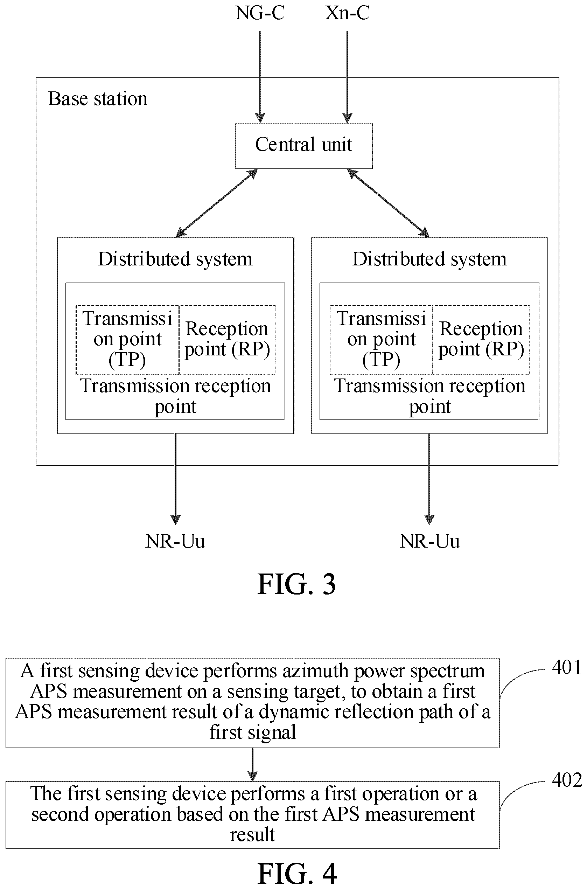

FIG. 3 further shows a function separation architecture of an NG radio access network (NG-RAN) in R16. In gNB function separation, the NG-RAN includes one gNB central unit (central unit, CU) and one or more gNB distributed units (distributed units, DUs), communication may be performed through an F 1 interface, and the gNB-CU may be connected to one or more gNB-DUs that carry a transmission point TP/reception point (reception point, RP)/transmission reception point TRP.

Currently, a positioning method supported in 3GPP R16 includes: a downlink time difference of arrival (downlink time difference of arrival, DL-TDOA) method, an uplink time difference of arrival (uplink time difference of arrival, UL-TDOA) method, a multi-cell round trip time (multi-cell round trip time, Multi-RTT) method, a downlink angle of departure (downlink angle of departure, DL-AOD) method, an uplink angle of arrival (uplink angle of arrival, UL-AOA) method, and an enhanced cell ID (enhanced cell ID, E-CID) method.

The DL-TDOA method and the UL-TDOA method have been applied in an LTE era. In the DL-TDOA method, a down link-positioning reference signal (down link-positioning reference signal, DL-PRS) is used. The UE receives DL-PRSs delivered by different cells, measures a reference signal time difference (reference signal time difference, RSTD), and report the RSTD to the LMF. The LMF calculates a position of the UE according to known position information of the base station. In the UL-TDOA method, an up link-sounding reference signal (up link-sounding reference signal, UL-SRS) is used. Different cell sites receive a relative time of arrival (relative time of arrival, RTOA) sent by the UE and report the RTOA to the LMF. The LMF calculates a position of the UE according to known position information of the base station. In addition to the foregoing two methods, the Multi-RTT method, the DL-AOD method, and the UL-AOA method are relatively new positioning methods in NR.

In the multi-RTT method, the base station performs downlink transmission on the DL-PRS, and the UE performs uplink transmission on the UL-SRS. The base station performs UL-SRS configuration on the UE by using an RRC protocol, and the LMF performs DL-PRS configuration on the UE by using the LPP. The UE reports a measurement result to the LMF by using the LPP, and the base station reports estimation on position information of the UE to the LMF by using the NRPPa protocol.

In the DL-AOD method, the base station performs downlink transmission on a DL-PRS beam, the UE measures corresponding reference signal received power (reference signal received power, RSRP) and reports a measurement result to the LMF by using the LPP, and in this case, the base station sends angle information of the DL-PRS beam to the LMF by using the NRPPa protocol.

In the UL-AOA method, a base station TRP reports, to the LMF through an NRPPa, an AOA measurement result and some other configuration information, for example, a TRP coordinate and beam configuration information. The LMF calculates an estimation result of the position of the UE based on the information.

In addition, the foregoing methods may be used in combination with another method (or a measurement process corresponding to the another method), to further improve positioning precision. For example, the DL-TDOA method is combined with the DL-AOD method, or the UL-TDOA method is combined with the UL-AOA method, or the multi-RTT method is combined with downlink PRS-RSRP measurement, uplink SRS-RSRP measurement, and AOA measurement.

A DL-PRS resource occupies a plurality of consecutive orthogonal frequency division multiplex (orthogonal frequency division multiplex, OFDM) symbols in time domain, occupies a plurality of consecutive physical resource blocks (physical resource blocks, PRBs) in frequency domain, and supports multiplexing on a plurality of different DL-PRS resources on different subcarriers in a combing manner. A DL-PRS sequence is a pseudo-random sequence (Gold sequence), and an initial value of a generation sequence of the DL-PRS sequence is a function of a PRS sequence ID, a slot index, and a symbol index. A frequency domain starting PRB and bandwidth of the DL-PRS are configured through a higher layer. A granularity of a parameter of starting PRB configuration is one PRB, and a granularity of bandwidth configuration is 4 PRBs. A bandwidth range may be configured to be in a range of 24 to 272 PRBs, and all PRS resources in a DL PRS resource set have the same starting PRB and bandwidth. Patterns of a resource element (resource element, RE) of the DL-PRS resource are staggered in the time domain and support periodic transmission.

The UL-SRS for positioning and the SRS for communication are similar (a sequence (Zadoff-chu, ZC) is issued based on a communication signal), but are configured separately in a network. The UL-SRS for positioning can occupy, from any symbol of an uplink slot, 1, 2, 4, 8, or 12 consecutive OFDM symbols in the time domain, to provide sufficient coverage to ensure that all associated TRPs can be received. To reduce collision and uplink interference between positioning SRS signals sent by different UEs, a quantity of sequence identifiers of the UL-SRS is increased by 64 times a quantity of sequence identifiers of an NR SRS. A frequency domain comb configuration of the UL-SRS may be configured as 8, and power that does not include a positioning signal may be borrowed to obtain an increase in power spectral density, to improve a received SINR of an SRS positioning signal. In addition, the UL-SRS adopts a staggered pattern design to reduce a side lobe value generated by a correlation operation during sequence detection.

As can be seen from the above, in an NR positioning method in the related art, a positioning target (which may also be referred to as a sensing target or a sensing positioning target) needs to have a communication capability, to enable the positioning target to measure a received signal and/or send a signal, so that the TRP, the RP, the TP, and the like that perform positioning on the positioning target determine position information of the positioning target according to a transmission delay, transmission power, and the like with the positioning target.

In view of this, the embodiments of this application provide a positioning sensing method, which can use a sensing node to perform positioning on a communication device that does not have the communication capability or does not send and receive a signal during positioning. In this way, a vehicle, a pedestrian, or another object/animal can be positioned, thereby expanding a range of the positioning target that can be positioned.

With reference to the accompanying drawings, the positioning sensing method provided in the embodiments of this application is described in detail below by using some embodiments and application scenarios thereof.

As shown in FIG. 4, the positioning sensing method provided in the embodiments of this application includes the following steps:

Step 401: A first sensing device performs azimuth power spectrum APS measurement on a sensing target, to obtain a first APS measurement result of a dynamic reflection path of a first signal, the first APS measurement result being used for determining a positioning result of the sensing target.

Step 402: The first sensing device performs a first operation or a second operation based on the first APS measurement result.

The first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

In the embodiments of this application, the first sensing device and the second sensing device may be referred to as sensing nodes, where the first sensing device includes a terminal, a network side device, or a dedicated sensing device for performing sensing measurement. The first sensing device may be a sending device of the first signal, or may be a receiving device of the first signal.

It is to be noted that, when the first sensing device is not the sending device of the first signal, the sending device of the first signal may be the terminal, the base station, or the dedicated sensing device. In this case, when the sending device of the first signal is further configured to calculate the positioning result of the sensing target, the sending device is equivalent to a computing device. For example, when the sending device is a base station, and the base station does not participate in APS sensing measurement, the first sensing device and the second sensing device may report APS measurement results to the base station, where the reported APS measurement results may be APS measurement results of an entire channel, or may be APS measurement results in a preset angle range.

Optionally, in a case that the first sensing device is a sending device of the first signal, a receiving device of the first signal includes the terminal, the network side device, or the dedicated sensing device; or in a case that the first sensing device is a receiving device of the first signal, a sending device of the first signal includes the terminal, the network side device, or the dedicated sensing device. For example, in some embodiments, the sensing nodes performing sensing measurement may include at least two terminals, or may include at least one base station and at least one terminal, and may further include at least two base stations.

It may be understood that, in a case that the first sensing device is a terminal or a dedicated sensing device, the first sensing device usually does not have a positioning result conversion capability, and in this case, the first sensing device may perform the first operation based on the first APS measurement result, for example, report the first APS measurement result to the base station or the core network device, where the first APS measurement result may be an APS measurement result of the entire channel, or may be an APS measurement result in the preset angle range. When the first sensing device is a network side device, for example, a base station, if the first sensing device does not have the positioning result conversion capability, in this case, the first sensing device may perform the first operation based on the first APS measurement result, for example, report the first APS measurement result to the base station or the core network device; and if the first sensing device has the positioning result conversion capability, in this case, the first sensing device may perform the second operation based on the first APS measurement result. The core network device may be understood as or replaced with a sensing network function or a sensing network element.

Optionally, the at least one second APS measurement result may be obtained by the first sensing device from the corresponding second sensing device, or may be obtained by the first sensing device from the core network device, for example, the second sensing device directly reports an APS measurement result to the core network device. The second APS measurement result may be an APS measurement result of the entire channel obtained by performing APS measurement by the second sensing device, or may be an APS measurement result in the preset angle range, thereby reducing a reporting volume, and reducing resource overheads of a system.

It is to be noted that, the positioning sensing method in the embodiments of this application is applicable to single positioning or continuous positioning on the sensing target. The first sensing device and the second sensing device are sensing devices in a static state. The sensing target may be a sensing object in a moving state, and the sensing object may be a UE or may not be a UE. The dynamic reflection path of the first signal is a multipath signal received by the sensing device (such as the first sensing device and/or the second sensing device) after the first signal is reflected by the sensing target.

In the embodiments of this application, azimuth power spectrum APS measurement is performed on a sensing target to obtain a first APS measurement result of a dynamic reflection path of a first signal, the first APS measurement result being used for determining a positioning result of the sensing target; and a first operation or a second operation is performed based on the first APS measurement result. In this way, at least two sensing devices jointly obtain an APS measurement result of the dynamic reflection path of the first signal to determine the positioning result of the sensing target, so that the sensing target can implement positioning without having a function of receiving and sending signals, thereby improving an application range of sensing positioning.

It is to be noted that, sensing positioning may be triggered by a sensing demand-side. For example, the sensing demand-side may send a sensing requirement to the core network device, to trigger sensing positioning. The sensing demand-side may be the terminal, the base station, the sensing target or a third-party application server equivalent to the access network device and the core network device. The sensing requirement may include at least one of the following: a sensing region (for example, a sensing region geographical coordinate, a length, a width, and a height of the sensing region, and the like), a sensing target type (for example, a car, a motorcycle, a pedestrian, and the like, which indicates a moving speed range of the sensing target and a wireless signal reflection power level from another perspective), a sensing target UE indication (that is, whether the sensing target is a UE, where if yes, corresponding information such as a UE ID may be attached), sensing/communication-sensing integrated quality of service (quality of service, QoS), a minimum quantity requirement of UEs participating in cooperative sensing, a quantity and density of sensing targets in the sensing region, a sensing result feedback manner (for example, whether feedback is performed in real time or performed after the end of a sensing service or a communication and sensing service), whether continuous positioning or single positioning is performed, a positioning start condition and a continuous positioning end condition, and the like. The sensing/communication-sensing integrated QoS may include a sensing/communication-sensing integrated service type, a sensing/communication-sensing integrated service priority, a requirement on sensing a resolution, a requirement on sensing an error, a sensing delay budget, a requirement on a maximum sensing range, a requirement on a continuous sensing capability, a requirement on sensing update frequency, and communication QoS (communication QoS of a sensing/communication-sensing integrated service). The communication QoS may include a communication delay budget and a false alarm rate.

A start condition for positioning/continuous positioning may include any one of the following:

sensing is directly initiated by the sensing demand-side and is not limited by time or a location;
the sensing target arrives at a preset (physical) region based on another positioning technology;
sensing target position information obtained by the sensing target based on another positioning technology is received; the position information may be sent by the sensing target, or may be sent by the sensing demand-side; and
start time of a preset sensing service or communication and sensing service is reached (for example, continuous positioning sensing on a moving target (a vehicle) at an intersection is performed at 5:30 pm every Friday).

The communication and sensing service may also be referred to as a communication-sensing integrated service, which may specifically include both a communication service and a sensing service.

Optionally, in some embodiments, the first signal includes any one of the following:
a dedicated sensing signal, a communication-sensing integrated signal, an LTE reference signal, and an NR reference signal.

In this embodiment of this application, if the NR reference signal is used, a downlink reference signal may be a reference signal that is configurable in the time domain, such as an SSB, a CSI-RS, a downlink positioning reference signal (downlink positioning reference signal, DL-PRS), or a phase-tracking reference signal (phase-tracking reference signal, PT-RS). An uplink reference signal may be a reference signal that is configurable in the time domain, such as an SRS or a UL-SRS.

Optionally, in some embodiments, the sending the first APS measurement result includes: sending a plurality of first APS measurement results, the plurality of first APS measurement results being used for determining a movement trajectory of the sensing target, and the plurality of first APS measurement results being APS measurement results obtained by performing APS measurement for a plurality of times.

It may be understood that, during APS measurement, a measurement timestamp needs to be recorded and saved, and reported together with the APS measurement result. If conversion of a sensing result (that is, calculation of the positioning result of sensing target) is measured on the core network device, the base station reports an APS measurement result and measurement timestamp information of each UE to the core network device. If measurement is periodically performed (that is, time intervals between two vector measurements are the same, for example, when periodic UL-SRS and DL-PRS are used), a measurement sequence number and a (sensing/communication-sensing integrated signal/NR reference signal) measurement period may be reported instead of the timestamp information.

Optionally, in some embodiments, assuming that the first sensing device is a computing device (or referred to as a computing node) that measures conversion of the sensing result, the positioning result may be directly determined on the first sensing device. For example, the determining the positioning result of the sensing target according to the first APS measurement result and at least one received second APS measurement result includes:

determining a target region range;
determining a first confidence corresponding to each position coordinate in the target region range according to a target position coordinate, the first APS measurement result, and the second APS measurement result; and
determining the positioning result of the sensing target according to the first confidence, where
in a case that the first sensing device or the second sensing device includes a sending device of the first signal, the target position coordinate includes a position coordinate of the first sensing device and a position coordinate of the second sensing device; or in a case that the first sensing device and the second sensing device do not include a sending device of the first signal, the target position coordinate includes a position coordinate of the first sensing device, a position coordinate of the second sensing device, and a position coordinate of the sending device.

Optionally, in some embodiments, the determining the positioning result of the sensing target according to the first confidence includes:
determining a position coordinate in the target region range with the highest first confidence as a positioning position of a target sensing object.

Optionally, in some embodiments, the determining a first confidence corresponding to each position coordinate in the target region range according to a target position coordinate, the first APS measurement result, and the second APS measurement result includes:

determining a reflection path angle value corresponding to the target position coordinate according to position information of a target sensing device and position information of the sending device, the target sensing device being any sensing device performing APS measurement on the sensing target, and the target position coordinate being any position coordinate in the target region range;
determining a second confidence according to the reflection path angle value, an APS measurement result corresponding to the target sensing device, and a weight coefficient corresponding to the target sensing device, the weight coefficient being used for representing a confidence of the APS measurement result corresponding to the target sensing device, and the second confidence representing a possibility that the sensing target is located in a direction of the reflection path angle value of the target sensing device; and
determining a first confidence of the target position coordinate based on the second confidence corresponding to a plurality of sensing devices performing APS measurement on the sensing target, the first confidence being positively correlated to the second confidence of each sensing device.

In this embodiment of this application, second confidences corresponding to the plurality of sensing devices performing APS measurement at the target position are added or multiplied, to obtain the first confidence. For details, refer to formula (1) and formula (2) in the following.

Optionally, weight coefficients corresponding to the same sensing device at different moments are fixed values, or weight coefficients corresponding to the same sensing device at different moments change in a preset range.

It is to be noted that, for example, a quantity of UEs participating in cooperative sensing is 2, and the sensing target is a pedestrian. In this embodiment of this application, a positioning principle of the positioning sensing method is as follows:

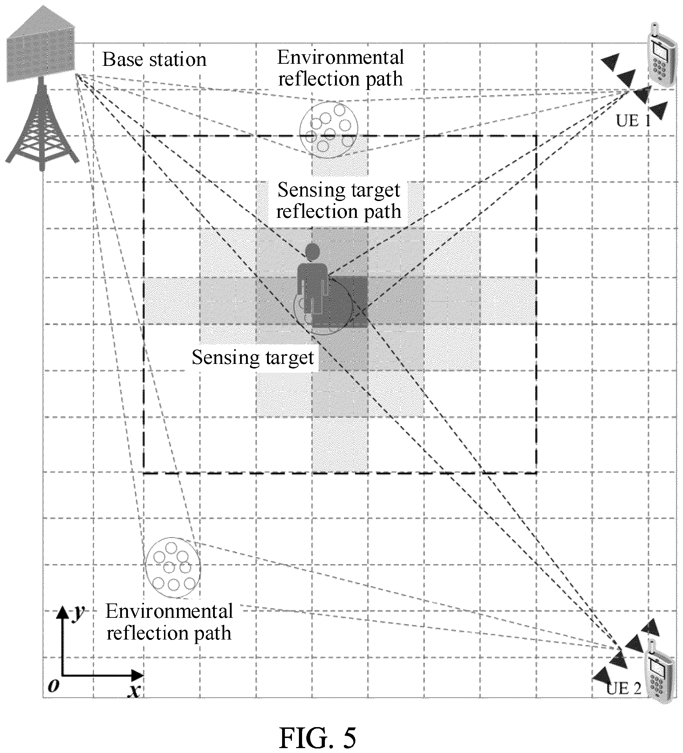

For intuitive description, it is assumed that relative positions of the base station, the UE, and the pedestrian are shown in FIG. 5 (in fact, the UE and the base station are not necessarily at three vertices of a square region), position coordinates of the base station and the UE, and an orientation of an own multi-antenna array are known. For each measurement moment, a UE 1 and a UE 2 may obtain an angle of arrival APS of a downlink signal (or an angle of departure APS of an uplink signal) including a dynamic reflection path caused by the pedestrian. In addition, the base station may also obtain an angle of departure APS of a downlink signal (or an angle of arrival APS of an uplink reflection signal) including the dynamic reflection path caused by the pedestrian. Specific angle estimation may be obtained based on an angle measurement method and an NR beam management idea in a current NR positioning technology, or may be implemented by the UE or the base station by using an own algorithm. For example, an azimuth power spectrum may be obtained through fast Fourier transform (fast Fourier transform, FFT), a commonly used spatial filter (such as a Bartlett beamformer (Bartlett beamformer)), minimum variance distortionless response (minimum variance distortionless response, MVDR), multiple signal classification (multiple signal classification, MUSIC), and an improved algorithm thereof. Dynamic reflection path identification may be implemented through Doppler spectrum estimation in combination with pattern recognition or machine learning.

For any moment during continuous positioning, as long as two of the UE 1, the UE 2, and the base station determine an angle of arrival/angle of departure of a reflection signal of the sensing target, a pedestrian position is an intersection point of extension lines in estimated angle directions with the UE 1, the UE 2, and the base station as starting points. However, because sensing capabilities of the UEs are relatively weak, and different UEs may have different sensing capabilities, the pedestrian position estimated through UE cooperation (or cooperation between the base station and the UE) and sensing is wider region. For an overlapping portion of regions obtained through cooperative sensing by a plurality of UEs, the sensing target is more likely to exist, that is, a measurement confidence is higher. A greater quantity of UEs participating in sensing indicates a higher confidence of an overlapping region of regions estimated by each two in all UEs. The measure confidence may be the second confidence.

It is assumed that a channel azimuth power spectrum APS obtained by the UE 1 at a moment $t_n$ is $P_{u1}(\varphi_1, t_n), \varphi_1 \in [\varphi_{min1}, \varphi_{max1}]$, a channel azimuth power spectrum APS obtained by the UE 2 at the moment $t_n$ is $P_{u2}(\varphi_2, t_n), \varphi_2$

$\in [(\varphi_{min2}, \varphi_{max2}]$, and a channel azimuth power spectrum APS obtained by the base station at the moment $t_n$ is $P_0(\varphi_0, t_n)$,, $\varphi_0$ $\in [\varphi_{min0}, \varphi_{max0}]$, where n is a positive integer. The sensing region is divided into a grid map shown in FIG. 5. Theoretically, if all grids on the map are traversed as possible positions of the sensing target, each grid position may be combined with each UE position to obtain a corresponding angle of arrival (or an angle of departure, which depends on the uplink signal or the downlink signal) of the UE, and the angle is substituted into a UE azimuth power spectrum at a corresponding time to obtain a corresponding power value. Assuming that the pedestrian position at the moment $t_n$ is $(x_n, y_n)$, a corresponding angle of arrival of the base station is $\varphi_{n0}$, an angle of arrival of the UE 1 is $\varphi_{n1}$, and an angle of arrival of the UE 2 is $\varphi_{n2}$, a confidence $C^n_{position}$ corresponding to the pedestrian at the position $(x_n, y_n)$ may be defined as meeting formula (1) or formula (2) in the following:

$$C^n_{position} = \prod_{i=1}^{I} \lambda_{ui}(t_n) P_{ui}(\varphi_{ni}, t_n) \quad (1);$$

and

$$C^n_{position} = \sum_{i=1}^{I} \lambda_{ui}(t_n) P_{ui}(\varphi_{ni}, t_n) \quad (2).$$

During actual application, all sensing devices may perform calculation by using formula (1), or all sensing devices may perform calculation by using formula (2). Alternatively, some sensing terminals may perform calculation by using formula (1), and some sensing terminals may perform calculation by using formula (2). Descriptions are made by using formula (1) as an example. According to actual sensing measurement situation, there are several sensing cases: Case 1: Only the UE 1 and the UE 2 perform measurement. Case 2: The base station, the UE 1, and the UE 2 perform measurement. Case 3: The base station and the UE 1 perform measurement, or the base station and the UE 2 perform measurement.

For Case 1,

For Case 2,

$$C^n_{position} = \left[\lambda_{u1}(t_n) P_{u1}(\varphi_{n1}, t_n)\right] \cdot \left[\lambda_{u2}(t_n) P_{u2}(\varphi_{n2}, t_n)\right];$$

$$C^n_{position} = \left[\lambda_0(t_n) P_0(\varphi_{n0}, t_n)\right] \cdot \left[\lambda_{u1}(t_n) P_{u1}(\varphi_{n1}, t_n)\right] \cdot \left[\lambda_{u2}(t_n) P_{u2}(\varphi_{n2}, t_n)\right];$$

and

For Case 3,

$$C^n_{position} = \left[\lambda_{u0}(t_n) P_0(\varphi_{n0}, t_n)\right] \cdot \left[\lambda_{ui}(t_n) P_{ui}(\varphi_{ni}, t_n)\right], i = 1 \text{ or } 2;$$

$\lambda_{u1}(t_n)$ represents a weight coefficient of the UE 1 at the moment $t_n$, $\lambda_{u2}(t_n)$ represents a weight coefficient of the UE 2 at the moment $t_n$, and $\lambda_{u0}(t_n)$ represents a weight coefficient of the base station at the moment $t_n$.

It may be understood that, the weight coefficient is in a range of (0, 1] or (0, a non-negative value]. A larger value indicates a higher confidence of sensing measurement on a corresponding sensing device. If continuous positioning sensing is performed, the weight may be a fixed value or a variable in a value range, that is, the weight may be associated with time or a spatial position of the sensing target.

In this embodiment of this application, after an approximate search range (that is, the target region) of an initial position of the sensing target is determined, the computing device divides the search range into several search grid points, and a coordinate of each grid point represents a position coordinate. The size of the grid point is comprehensively determined based on a sensing capability of each UE in cooperative sensing (for example, a quantity of antennas during UE angle measurement, bandwidth of a sensing signal, and the like).

It is assumed that a position of the sensing target is each divided grid point. Based on a position coordinate of the grid point, a position coordinate of the base station participating in sensing and/or a position coordinate of the UE participating in cooperative sensing, an angle value (AOD or AOA) of a dynamic reflection path on a base station side participating in sensing and/or a UE side participating in cooperative sensing when the sensing target is at the grid position. The angle value is substituted into equation (1) or equation (2), and a first confidence of the grid point is obtained based on a confidence criterion. The calculation node repeats the foregoing calculation on all grid points, and uses a position coordinate of a grid point with a maximum first confidence as an estimated position of the sensing target.

It is to be noted that, the weight coefficient may be a fixed value or a dynamic adjusted value in the continuous positioning sensing service or the communication and sensing service. The dynamic adjustment may be performed when sensing resources of a cooperative sensing device need to be reconfigured, or the sensing target enters or leaves an optimal sensing range of the cooperative sensing device. Adjustment on the weight coefficient of the cooperative sensing device may be determined by the core network device.

It may be understood that, the determining a target region range includes at least one of the following:

in a case that the 1st positioning is performed on the sensing target based on an APS measurement result, determining the target region range corresponding to the 1st positioning based on a first preset rule; and
in a case that M* positioning is performed on the sensing target based on an APS measurement result, determining the target region range corresponding to the Mth positioning based on an (M-1)th positioning result, M being an integer greater than 1.

Optionally, in some embodiments, the first preset rule includes at least one of the following:

rule 1: the target region range is a region range indicated by a core network device, the region range indicated by the core network device being determined based on first prior information of the sensing target;
rule 2: the target region range is determined based on a first position, the first position being a positioning position at which at least one sensing device performs positioning on the sensing target based on an echo in a manner of self-transmitting and self-receiving a sensing signal;
rule 3: in a case that the sensing target is a terminal, the target region range is determined based on a second position, the second position being a positioning position of the sensing target determined based on a new radio NR positioning method; and
rule 4: the target region range is determined based on a third position, the third position being a positioning position of the sensing target determined through a global positioning system (global positioning system, GPS), or Bluetooth, or by using an ultra-wideband UWB technology.

Optionally, for the rule 1, the sensing target is not required to be a UE. The first prior information includes at least one of the following:

an initial position region in which the core network device receives a sensing target provided by another device;
a positioning position that is in the region of the sensing target and that is of last positioning in continuous positioning previously performed on the sensing target;
prestored map information and obstacle information in a sensing region;
a prestored probability map of an initial position of the sensing target in the sensing region; and
position information of a plurality of sensing devices configured to perform APS measurement on the sensing target.

For the rule 2, the first position may be understood as an initial position, and the initial position of the sensing target may be determined through sensing measurement by a sensing node at the initial position. In this case, the sensing node at the initial position (one of the base station or the cooperative sensing UE) needs to temporarily occupy more time domain resources (that is, it is necessary to increase density, a quantity of repetitions, and a coverage time length of the sensing/communication-sensing integrated signals/reference signals in the time domain), frequency domain resources (that is, it is necessary to increase distribution density and a coverage frequency range of the sensing/communication-sensing integrated signals/reference signals in the frequency domain), and space domain resources (that is, it is necessary to increase a quantity of antennas sensing and an aperture of an antenna array). Optionally, the sensing node at the initial position may be determined by the core network device based on sensing capability information reported by each sensing device (or sensing node). The sensing node reports the obtained first position to the core network device, and the core network device determines a target region range and notifies the first sensing device of the target region range. The sensing node at the initial position may be completed by one or more base stations, or may be completed by one or more terminals, or may be completed by both the base station and the terminal.

For the rule 3, the sensing target is required to be a UE, and the initial position of the sensing target is determined based on the NR positioning method. Whether the sensing target is a UE is indicated in the sensing requirement. When the sensing target is also the UE, the core network device may determine to initiate sensing target positioning to obtain an approximate range of the initial position.

For the rule 4, the sensing target is required to be a UE, the third position may be understood as the initial position, and the target region range corresponding to the initial position is determined through the GPS. The sensing target is not required to be a UE, and the initial position is determined through Bluetooth (Bluetooth) or in a manner such as an ultra wide band (ultra wide band, UWB) technology.

When the plurality of rules are included, it may be understood that the target region range is determined jointly by the plurality of rules.

Optionally, in some embodiments, the method further includes:

reporting, by the first sensing device, target information to a computing device, the target information including device information of the first sensing device, the device information of the first sensing device being used by the computing device to determine whether the first sensing device participates in cooperative sensing, and the computing device being a base station that determines to participate in cooperative sensing or a core network device.

In this embodiment of this application, the first sensing device is not a computing device, that is, whether to participate in cooperative sensing is not calculated on the first sensing device. In this case, the first sensing device needs to report the device information of the first sensing device to the computing device. It may be understood that, reporting by the first sensing device to the computing device may be understood as directly reporting to the computing device or indirectly reporting to the sensing device through an intermediate device. For example, when the first sensing device is a terminal and the first computing device is a core network device, the first sensing device may report the target information to the base station. The device participating in cooperative sensing may be understood as a sensing device that sends or receives the first signal.

Optionally, in some embodiments, the target information further includes device information of at least one sensing device received by the first sensing device, the device information of the sensing device being used by the computing device to determine whether the sensing device participates in cooperative sensing.

In this embodiment of this application, the at least one sensing device may be understood as a device with a sensing function. The first sensing device may receive the device information sent by the at least one sensing device and report the device information together with device information of the first sensing device. It is to be noted that, when it is determined that a sensing device other than the first sensing device participates in cooperative sensing and the sensing device performs APS measurement, the sensing device may be understood as a second sensing device.

Optionally, in some embodiments, assuming that the first sensing device is a computing device, for example, the first sensing device is a base station, in this case, the method further includes:

determining, by the first sensing device according to received device information of a sensing device, at least some second sensing devices that participate in cooperative sensing.

In this embodiment of this application, the second device participating in cooperative sensing may be completely determined by the first sensing device, or may be partially determined by the core network device and partially determined by the first sensing device. This is not further limited herein.

Optionally, a manner in which the first sensing device determines the at least some second sensing devices that participate in cooperative sensing includes any one of the following:

in a case that the device information includes motion state information and position information, determining, according to information about a sensing region in a sensing requirement, the motion state information, and the position information, the second sensing device that participates in cooperative sensing;

in a case that the device information includes motion state information, position information, and a position information determining method, determining, according to information about a sensing region in a sensing requirement, the motion state information, the position information, and the position information determining method, the second sensing device that participates in cooperative sensing;

in a case that device information includes motion state information, position information, and sensing capability information, determining, according to information about a sensing region in a sensing requirement, the motion state information, and the sensing capability information, the second sensing device that participates in cooperative sensing;

in a case that the device information includes motion state information, position information, communication state information, and sensing state information, determining, according to information about a sensing region in a sensing requirement, the motion state information, the position information, the communication state information, and the sensing state information, the second sensing device that participates in cooperative sensing; or

determining the second sensing device according to at least one of information about a sensing region in a sensing requirement and the device information of the sensing device.

Optionally, the device information includes at least one of the following: state information and sensing capability information.

Optionally, the state information includes at least one of the following: position information, a position information determining method, motion state information, panel orientation information, panel tilt angle information, communication state information, sensing state information, and beamforming configuration information.

For example, in some embodiments, the core device may first determine a base station participating in sensing, and then the base station participating in sensing broadcast control information carrying a sensing requirement and a UE status information reporting request to the sensing region. A UE within coverage of the base station reports device information of the UE. The core network device determines a UE participating in cooperative sensing based on the sensing requirement and the device information reported by the UE. Alternatively, the base station participating in sensing determines the UE participating in cooperative sensing based on the device information reported by the UE. Alternatively, the core network device determines some UEs participating in cooperative sensing based on the device information reported by the UE, and the base station participating in sensing determines some other UEs participating in cooperative sensing based on the device information reported by the UE. The UE may be another type of sensing node with the same function, for example, a small cell. Further, the base station may report, to the core network device, information about a terminal determining to participate in cooperative sensing. Specifically, the reported information may include at least one of the following: a cooperative sensing UE ID, cooperative sensing UE position information, a method for determining the cooperative sensing UE position information (or equivalently, information indicating accuracy of a UE position), a total quantity of cooperative sensing UEs in the sensing region, and cooperative sensing UE status information.

Further, the position information of the UE participating in cooperative sensing may be missing. In this case, the core network device may also initiate a positioning process for this part of UEs to obtain position information of the UEs. The positioning may be performed by using the NR positioning method or another method. After the positioning process for this part of UEs is completed and the position information the part of the UE is obtained, the base station or the UE reports the position information of this part of the UEs, a method for portioning this part of the UE positioning method (or equivalently, information indicating accuracy of a UE portion), and other device information of this part of UEs are reported to the core network device. The core network device ultimately determines all UEs participating in cooperative sensing.

Optionally, in some embodiments, the first APS measurement result is an APS measurement result of an entire channel or an APS measurement result in a preset angle range, the preset angle range is determined by the first sensing device or indicated by a computing device, and the computing device is a base station that determines to participate in cooperative sensing or a core network device.

In this embodiment of this application, the APS measurement result of the entire channel may be reported, or the APS measurement result in the preset angle range corresponding to the dynamic reflection path of the sensing target may be reported, thereby reducing reporting overheads. The preset angle range may be identified from historical APS measurement results and/or dynamic reflection path spectrum peaks. For example, the core network device may predict an approximate location range of a current sensing target based on a historical positioning result of continuous positioning, further obtain an approximate range from the sensing target to an angle of arrival (or an angle of departure, depending on whether measurement is uplink or downlink) of each cooperative sensing UE, and deliver a range the angle of arrival (or angle of departure) to each cooperative sensing UE. The UE feeds back, based on the result, an APS measurement value in a corresponding angle range to the core network.

Optionally, in some embodiments, the performing, by a first sensing device, azimuth power spectrum APS measurement on a sensing target, to obtain a first APS measurement result of a dynamic reflection path of a first signal includes at least one of the following:

in a case that the first sensing device is a sending device of the first signal, sending, by the first sensing device, the first signal in a beam scanning manner, receiving a first measurement result of the second sensing device based on the first signal, and determining an angle of departure APS according to the first measurement result, the first measurement result including reference signal received power RSRP measurement results corresponding to a plurality of beams; or

in a case that the first sensing device is a receiving device of the first signal, receiving, by the first sensing device, the first signal in a beam scanning manner to obtain a second measurement result, and determining an angle of arrival APS according to the second measurement result, the second measurement result including RSRP measurement results corresponding to a plurality of beams.

In this embodiment of this application, descriptions are made by using sensing measurement between the base station and the terminal as an example. Measurement includes the following cases:

1. For an angle of departure (angle of departure, AOD) APS on a downlink base station side, a downlink DL-PRS beam (beam scanning) may be sent, and the cooperative sensing UE receives a DL-PRS signal and performs DL-PRS RSRP measurement. The difference from an NR process is that the UE not only feeds back maximum RSRP beam index information to the base station, but also feeds back a corresponding RSRP measurement result for each beam, from which the base station obtains a channel AOD APS.

2. For an angle of arrival (angle of arrival, AOA) APS on a downlink terminal side, if the UE has a beam scanning capability and has a strong beam forming capability, after the DL-PRS-based AOA on the downlink base station side is determined, the base station side fixes an optimal downlink beam (that is, the UE side measures a downlink beam of the base station corresponding to maximum DL-PRS RSRP), and the UE performs beam scanning and reception, and measures the DL-PRS RSRP, to obtain a channel AOA APS.

3. For an AOD APS on an uplink UE side, if the UE has a beam scanning capabilities and has a strong beam forming capability, the UE sends an uplink UL-SRS beam (beam scanning), and the base station participating in sensing receives the UL-SRS and performs UL-SRS RSRP measurement. The difference from the NR process is that the base station not only indicates maximum RSRP beam index information to the UE, but also delivers a corresponding RSRP measurement result for each beam, from which the UE obtains a channel AOD APS.

4. For an AOA APS on an uplink base station side, the base station indicates, based on an UL-SRS RSRP measurement result, the UE to fix an uplink UL-SRS beam (that is, the base station side measures a UE uplink beam corresponding to maximum UL-SRS RSRP), and the base station performs beam scanning and reception, and measures UL-SRS RSRP, to obtain a channel AOA APS.

It is to be noted that, sensing devices may also be grouped, and the sensing device participating in cooperative sensing may be determined through grouping. For example, in some embodiments, UEs participating in cooperative sensing may be grouped. The group may be determined by the core network device. A procedure of determining a base station and a terminal that participating cooperative sensing is described below by using an example in which both the base station and the terminal are used as sensing devices for cooperative sensing.

First, the sensing region can be divided into sensing subregions, the sensing subregion is a smaller physical region in the sensing region. The division (a position and an area) of the sensing subregion may be determined according to at least one of the following:

a quantity and density information of sensing targets in the sensing region in the sensing requirement;
UE status information, for example, a maximum UE sensing distance, and the like;
information that is about UEs participating in cooperative sensing in the sensing region and that is mastered by the core network device;
base station status information, for example, a maximum base station sensing distance, a maximum communication coverage distance, and the like; and
information that is about base stations participating in cooperative sensing in the sensing region and that is mastered by the core network device.

Optionally, if the information is not available, division may also be performed according to a preset default value, for example, division is evenly performed, division is performed based on a historical continuous positioning service division result, or the like.

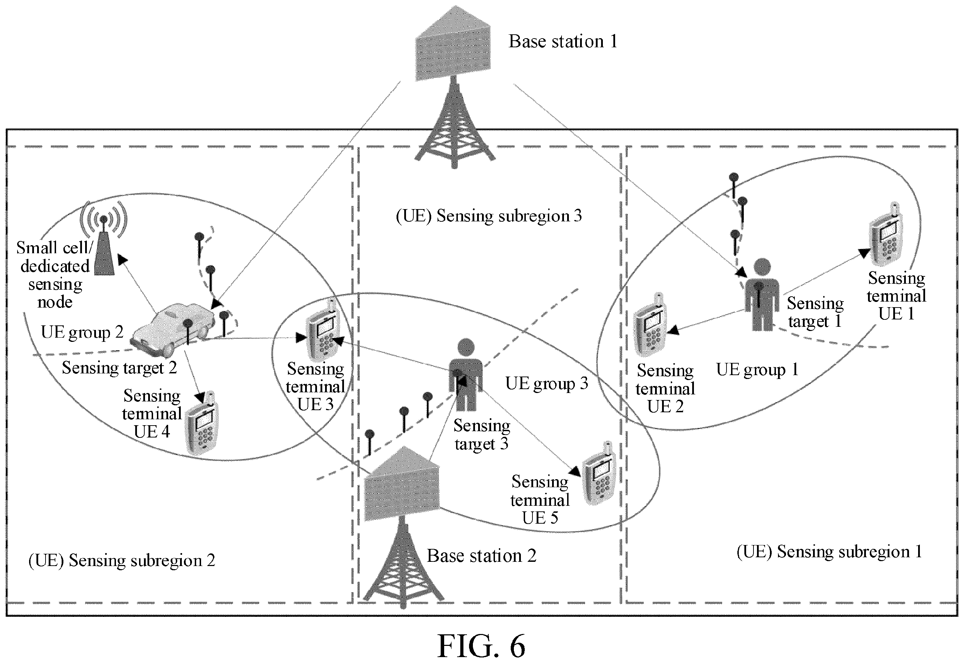

Optionally, two level division may be performed on the sensing subregions, respectively corresponding to division on subregions of the base station and the UE (hereinafter referred to as a base station sensing subregion and a UE sensing subregion respectively). Areas of physical regions on which two level division is performed may be different. Generally, a quantity of base stations is less than that of UEs, but coverage is larger and can support a larger sensing distance. Therefore, a physical range of the base station sensing subregion is generally larger than that of the UE sensing subregion. One base station sensing subregion may include one or more UE sensing subregions, and the base station sensing subregion may be physically discontinuous. As shown in FIG. 6, a sensing subregion corresponding to a base station 1 is a combined region of a UE sensing subregion 1 and a UE sensing subregion 2, that is, the sensing subregion of the base station 1 includes the UE sensing subregion 1 and the UE sensing subregion 2. A sensing subregion of a base station 2 only includes a UE sensing subregion 3. In addition, there may be a certain degree of overlap between the plurality of UE sensing subregions and the plurality of base station sensing subregions that are divided.

Then, base stations participating in sensing are allocated to each base station sensing subregion, and a group of cooperative sensing UEs are allocated to each UE sensing subregion. The basis for allocating cooperative sensing UEs to the UE sensing subregion may be at least one of the following: UE position information, UE sensing capability indication information, a UE sensing state indication, and a UE communication state indication in the UE status information. One sensing subregion corresponds to one UE group, and a total quantity of cooperative sensing UEs in one UE group is at least 2. There may be one or more base stations participating in sensing in the sensing region, and there may also be one or more base stations participating in sensing in one base station sensing subregion. The basis for allocating base stations participating in sensing to the base station sensing subregion may be at least one of the following:

base station position information, base station sensing capability indication information, a base station sensing state indication, and a base station communication state indication in the base station status information.

The UE group is associated with a sensing base station, the association basis may be at least one of the following: a base station sensing subregion division result, a UE sensing subregion division result, one or more of the base station status information, and one or more of the UE status information. A core network device delivers an association result to the base station participating in sensing. Optionally, the core network device delivers the association result to a cooperative sensing UE group.

Optionally, in consideration of randomness of UE distribution, a case in which some sensing subregions cannot have sufficient cooperative sensing UEs may occur. In this case, the base station can schedule UEs in another neighboring UE group that meets the sensing requirement to perform cooperative sensing in a time division multiplexing (or frequency division multiplexing or code division multiplexing) manner.

As shown in FIG. 6, an outermost solid line box represents a sensing region, a dotted line box represents three divided UE sensing subregions, and an ellipse frame represents different cooperative sensing UE groups. For a UE sensing subregion 3, only a UE 5 is available in this region. In this case, the network may configure a UE 3 into a time division multiplexing sensing mode, that is, on some slots, the UE 3 and another cooperative sensing UE in a UE group 2 perform continuous positioning on a sensing target 2; and on some other nonoverlapping slots, the UE 3 cooperates with the UE 5 in a UE group 3 to perform continuous positioning on a sensing target 3. Similarly, if a trajectory of the same sensing target passes through the UE sensing subregion 2 and the UE sensing subregion 3, the solution of reusing some UEs for cross-subregion cooperative sensing may also be adopted. For sensing regions with no base station and UE coverage, the core network device classifies the regions into sensing blind zones.

It is to be noted that, after the base station and the UE participating in cooperative sensing are determined, sensing-related parameters may be configured. For example, the core network device may send configuration parameter information related to the sensing/communication-sensing integrated signal/NR reference signal to the base station participating in sensing. The configuration parameter information of the UE may be transmitted through the core network device by using NAS signaling. Alternatively, the core network device may first send the configuration parameter information of the sensing/communication-sensing integrated signal to the base station participating in sensing, and then the base station delivers the information to the UE.

The configuration parameter information includes at least one of the following: a waveform, a subcarrier spacing, bandwidth, burst (burst) duration, an intra-burst signal time interval, an inter-burst time interval, transmit signal power, a signal format, a signal direction, a time resource, a frequency resource, an antenna/antenna port index, a quantity of antenna/antenna ports, and a quasi co-location (quasi co-location, QCL) relationship.

Further, in some embodiments, the method further includes:
switching, by the first sensing device according to a second preset rule, at least one device that participates in cooperative sensing.

In this embodiment of this application, as positioning time goes by, it may be necessary to switch at least one device for cooperative sensing, to ensure reliability of sensing.

Optionally, the second preset rule includes at least one of the following:

triggering, in a case that a first preset condition is met, to switch to a base station that participates in cooperative sensing; and
triggering, in a case that a second preset condition is met, to switch to a terminal group that participates in cooperative sensing, where
the at least one device includes at least one of at least one base station and the terminal group.

Optionally, the first preset condition includes at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;
it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;
it is determined, based on the current positioning result of the sensing target, that target spectral peak power reported by all terminals in a terminal group that is associated with at least one base station and that participates in cooperative sensing is less than a first preset value;
it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and

it is determined, based on the current positioning result and a historical positioning result of the sensing target, that a span of a trajectory physical range of the sensing target exceeds a third preset value.

Optionally, the second preset condition includes at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;

it is determined, based on a current positioning result of the sensing target, a distance between the sensing target and at least one terminal in a terminal group that participates in current cooperative sensing is greater than a second preset distance;

sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;

it is determined, based on the current positioning result of the sensing target, that a target measurement result reported by at least one terminal in the terminal group is less than a fifth preset value, target measurement being another measurement other than the target spectral peak power in measurement associated with APS measurement;

it is determined, based on the current positioning result and a historical positioning result of the sensing target, that a span of a trajectory physical range of the sensing target exceeds a sixth preset value; and

a base station that participates in cooperative sensing is switched.

It may be understood that, the at least one device participating in cooperative sensing may be a terminal, or may be a base station, or may be a dedicated sensing device.

To better understand this application, descriptions are made below by using some specific examples.

Embodiment 1: Group UEs participating in cooperative sensing and/or switch a base station participating in sensing.

Since the target may move during the sensing service, the target may leave a sensing range of an original cooperative sensing UE group. In this case, the network needs to allocate a new cooperative sensing UE group to the sensing target, or even allocate a new base station participating in sensing. The new cooperative sensing UE group may include some UEs in the original cooperative sensing UE group. When a new sensing base station is allocated, a new cooperative sensing UE group may also be allocated, or the original cooperative sensing UE group may be used, that is, the core network re-associates the cooperative sensing UE and the base station.

Optionally, a condition for switching the base station participating in sensing includes at least one of the following:

[1] Based on a positioning results of a current sensing target, it is found that the sensing target is to leave or has left a sensing subregion corresponding to a current base station.

[2] Based on a positioning results of a current sensing target, it is found that a distance between the sensing target and at least one base station currently participating in sensing is greater than a maximum sensing distance of the base station, and remaining base stations in the group are not enough to provide sensing results that meet predetermined sensing QoS.

[3] Based on an APS measurement result of a current channel, it is found that a measurement result of sensing target spectral peak power measured by the base station or reported by all associated UEs, or other measurement (for example, uplink or downlink sensing/communication-sensing integrated signal/NR signal received power, RSRP, and the like) related to channel APS measurement is less than a preset threshold.

[4] Based on a current positioning result and a historical positioning result of the sensing target, it is found that a span of a trajectory physical range of the sensing target exceeds a preset value.

A condition for triggering to switch a cooperative sensing UE group may include at least one of the following:

(1) Based on a positioning results of a current sensing target, it is found that the sensing target is to leave or has left a sensing subregion corresponding to a current cooperative sensing UE group.

(2) Based on a positioning results of a current sensing target, it is found that a distance between the sensing target and at least one UE in a current cooperative sensing UE group is greater than a maximum sensing distance of the UE, and remaining UEs in the group are not enough to provide sensing results that meet predetermined sensing QoS.

(3) Based on an APS measurement result of a current channel, it is found that a measurement result of sensing target spectral peak power of at least one UE in a cooperative sensing UE group, or other measurement (for example, uplink or downlink sensing/communication-sensing integrated signal/NR signal received power, RSRP, and the like) related to channel APS measurement is less than a preset threshold.

(4) Based on a current positioning result and a historical positioning result of the sensing target, it is found that a span of a trajectory physical range of the sensing target exceeds a preset value.

(5) The switching of the base station participating in sensing is triggered.

A process of switching the base stations participating in sensing includes:

1. Meet the condition for switching the base station and trigger the switching of the base station participating in sensing. If a node that detects a trigger condition is an original sensing base station (for example, the conditions [3] and [4]), the original sensing base station may send a sensing base station switching request to the core network device. The node that detects the trigger condition may also be a core network device (for example, the conditions [1], [2], and [5]).

2. The core network device determines a new base station participating in sensing and sends a sensing switching preparation indication to the new sensing base station. Alternatively, the core network device determines a new base station participating in sensing and sends a new sensing base station ID to the original sensing base station. The original sensing base station sends a sensing switching preparation indication to the new sensing base station.

3. The new sensing base station and the cooperative sensing UE group prepare for switching, and after completion, a switching preparation success indication to the core network device is reported to the core network device. Alternatively, the new sensing base station and the cooperative sensing UE group prepare for switching, and after completion, a switching preparation success indication is sent to the original sensing base station and the core network. After receiving the switching preparation success indication, the core network device sends a start sensing indication to the new sensing base station and a cooperative sensing UE group associated to the new sensing base station.

4. The new sensing base station and the cooperative sensing UE group perform sensing and report a sensing measurement result to the core network device. Optionally, at least one of the new sensing base station and the new cooperative sensing UE group sends a start sensing indication response to the core network device.

5. After receiving the sensing measurement result reported by the new cooperative sensing UE group or the start sensing indication response, the core network device sends a stop sensing indication to some or all UEs in the original cooperative sensing UE group, where the stop sensing indication may be delivered by using non-access stratum (non-access stratum, NAS) signaling, or may be delivered through the base station.

6. After receiving the stop sensing instruction, some or all UEs in the current cooperative sensing UE group stop sensing measurement and complete switching.

The process of switching the cooperative sensing UE groups includes:

1. If a node that detects a trigger condition (that is, a UE group switching condition) is a cooperative sensing UE and/or a base station participating in sensing (for example, the conditions (3) and (4)), the corresponding UE and/or base station sends a sensing UE group switching request to the core network device. Optionally, the node that detects the trigger condition may also be a core network device (for example, the conditions (1), (2), and (5)).

2. The core network device determines a new cooperative sensing UE group and sends a start sensing indication to the new cooperative sensing UE group, where the start sensing indication may be delivered by using NAS signaling or delivered through the base station.

3. The new cooperative sensing UE group performs cooperative sensing and report a sensing measurement result. Optionally, a UE in the new cooperative sensing UE group sends a start sensing indication response to the core network device.

4. After receiving the sensing measurement result reported by the new cooperative sensing UE group or the start sensing indication response, the core network device sends a stop sensing indication to some or all UEs in the original cooperative sensing UE group, where the stop sensing indication may be delivered by using NAS signaling, or may be delivered through the base station.

5. After receiving the stop sensing instruction, some or all UEs in the current cooperative sensing UE group stop sensing measurement and complete switching.

It is to be noted that, if the sensing target enters a sensing blind zone, the end of a continuous positioning sensing service may be triggered, or another positioning sensing process (such as performing continuous positioning based on a sensing node in a manner of self-transmitting and self-receiving a sensing signal, or performing NR continuous positioning, or performing continuous positioning based on GPS/Bluetooth/UWB) may be switched.

Embodiment 2: Failure and addition of a cooperative sensing UE.

During the continuous positioning sensing service, the cooperative sensing UE may be unable to continue supporting cooperative sensing due to own reasons of the UE. In this case, the network needs to perform failure judgment on the cooperative sensing UE and remove a failed cooperative sensing UE. If necessary, it is also necessary to perform UE addition on the current sensing cooperative UE group.

A condition for triggering cooperative sensing UE failure may include at least one of the following:

the cooperative sensing UE moves and no longer meets premise assumption in the method of this application;

the cooperative sensing UE is interrupted by a service with a higher priority and cannot continue to support cooperative sensing;

cooperative sensing UE sensing/communication-sensing integrated integration resources are limited and cannot meet a requirement on a cooperative sensing capability; and

the cooperative sensing UE actively initiates an interrupt cooperative sensing request.

If a quantity of UEs in the original cooperative sensing UE group does not meet the minimum quantity requirement after the UE fails, UE addition needs to be performed on the cooperative sensing group. Optionally, if there is a new UE that may be used for cooperative sensing in the sensing region, the network may also perform UE addition.

A specific failure and addition process of the cooperative sensing UE includes:

(1) When the failure conditions are met, a corresponding UE sends a sensing UE failure indication to the core network.

(2) The core network device receives the sensing UE failure indication, determines a new available cooperative sensing UE, and sends a stop sensing indication to the failed UE.

(3) If a newly available cooperative sensing UE currently appears and needs to be added, the core network device sends a start sensing indication to the newly determined cooperative sensing UE, where the start sensing indication may be delivered by using NAS signaling or delivered through the base station.

Embodiment 3: Adjustment on measurement confidences of the cooperative sensing UE and/or the base station.

During the sensing service, the measurement confidence of the cooperative sensing UE is reflected by the weight coefficient in formula (1) or formula (2). The measurement confidence of the UE finally integrates accuracy of results. The corresponding weight coefficient may be dynamically adjusted to obtain more accurate continuous positioning results.

Optionally, available sensing resources of the cooperative sensing UE may change. For example, during the sensing service, the UE obtains more resources (which may also be fewer resources) in time domain (where correspondingly, more symbols may be occupied in the time domain for transmitting sensing/communication-sensing integrated signals/NR reference signal s)/frequency domain (where correspondingly, greater sensing/communication-sensing integrated bandwidth is obtained)/space domain (where correspondingly, more antenna ports/a larger quantity of antennas for sensing/communication-sensing integrated integration). If a sensing capability of the UE changes, a measurement confidence of the UE also needs to be adjusted.

Optionally, measurement accuracy of the cooperative sensing UE is related to position accuracy of the cooperative sensing UE. If the cooperative sensing UE updates a position of the UE by using a more accurate positioning method, a measurement confidence of the UE also needs to be adjusted.

Optionally, measurement accuracy of the cooperative sensing UE is related to a position of the sensing target. When the position of the sensing target changes, a measurement confidence of the UE also needs to be adjusted. For example, for Doppler frequency measurement, when a distance between the sensing target and the base station and each cooperative sensing UE meets a far-field condition, measurement accuracy is higher. For APS measurement, when the sensing target faces a multi-antenna panel of the UE, measurement accuracy is higher.

Optionally, the measurement accuracy of the cooperative sensing UE is also related to a signal noise ratio (signal noise ratio, SNR) on a cooperative sensing UE side. For example, a higher measurement SNR of the UE indicates higher measurement accuracy, and the corresponding measurement confidence is correspondingly higher.

Optionally, a measurement confidence of each UE in the cooperative sensing UE group needs to ensure that a confidence of the position of the sensing target is kept in a preset range throughout the continuous positioning. When the cases in Embodiment 1 and Embodiment 2 occur, a quantity of UEs in the group may change. In this case, weight coefficients corresponding to all UEs in the group need to be adjusted as a whole.

It may be understood that adjustment on the measurement confidences may be completed by each sensing node by reporting an updated weight coefficient recommendation value to the core network, or may be autonomously performed by the core network device.

Embodiment 4: Positioning enhancement.

A major problem in existing outdoor GPS continuous positioning is that positioning is likely to be blocked by high-rise buildings, resulting in weak GPS signals, which causes low positioning accuracy in some regions or on some road sections, and even inability to perform GPS positioning services. In addition, the existing 3GPP positioning solution is limited by a large deployment distance of outdoor macro stations, and positioning accuracy is also relatively limited. In the positioning sensing method provided in this application, a GPS position before blocking may be used as an initial position to achieve continuous positioning on a sensing target in a region where GPS signals are blocked or coverage is poor. The method is a supplement to existing continuous positioning methods.

Specifically, a region in which GPS signals are blocked or coverage is poor is generally considered that there is still sufficiently dense distribution of base stations and UEs. When the sensing target is to enter a region in which GPS signals are blocked or coverage is poor, the continuous positioning sensing method in this application may be switched. In this case, GPS positioning information of the sensing target may be used as initial position information of continuous positioning in this method. When the sensing target moves out of a weak coverage region of GPS signals, GPS continuous positioning may be switched again. In this method, overall performance of the continuous positioning service is improved.

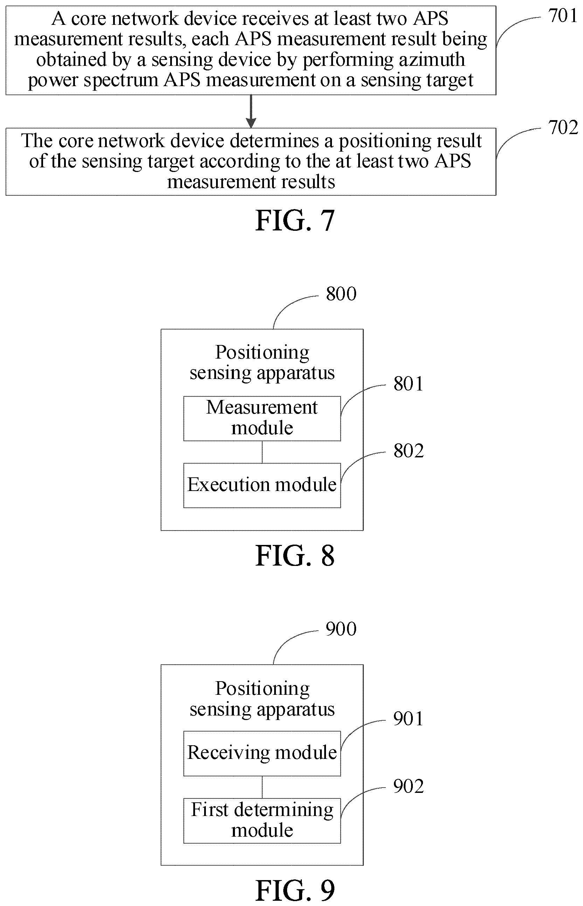

Referring to FIG. 7, the embodiments of this application further provide a positioning sensing method, including the following steps:

> Step 701: A core network device receives at least two APS measurement results, each APS measurement result being an APS measurement result that is of a dynamic reflection path of a first signal and that is obtained by a sensing device by performing azimuth power spectrum APS measurement on a sensing target.
>
> Step 702: The core network device determines a positioning result of the sensing target according to the at least two APS measurement results.

Optionally, before the receiving, by a core network device, at least two APS measurement results, the method further includes:

> receiving, by the core network device, device information of the sensing device; and
> determining, by the core network device according to the device information, whether the sensing device participates in cooperative sensing.

Optionally, a manner in which the core network device determines the sensing device that participates in cooperative sensing includes at least one of the following:

> in a case that the device information includes motion state information and position information, determining, according to information about a sensing region in a sensing requirement, the motion state information, and the position information, the second sensing device that participates in cooperative sensing;
> in a case that the device information includes motion state information, position information, and a position information determining method, determining, according to information about a sensing region in a sensing requirement, the motion state information, the position information, and the position information determining method, the second sensing device that participates in cooperative sensing;
> in a case that device information includes motion state information, position information, and sensing capability information, determining, according to information about a sensing region in a sensing requirement, the motion state information, and the sensing capability information, the second sensing device that participates in cooperative sensing;
> in a case that the device information includes motion state information, position information, communication state information, and sensing state information, determining, according to information about a sensing region in a sensing requirement, the motion state information, the position information, the communication state information, and the sensing state information, the second sensing device that participates in cooperative sensing; or
> determining the second sensing device according to at least one of information about a sensing region in a sensing requirement and the device information of the sensing device.

Optionally, the device information includes at least one of the following: state information and sensing capability information.

Optionally, the state information includes at least one of the following: position information, a position information determining method, motion state information, panel orientation information, panel tilt angle information, communication state information, sensing state information, and beamforming configuration information.

Optionally, the method further includes:

switching, by the core network device according to a second preset rule, at least one device that participates in cooperative sensing.

Optionally, the second preset rule includes at least one of the following:

triggering, in a case that a first preset condition is met, to switch to a base station that participates in cooperative sensing; and

triggering, in a case that a second preset condition is met, to switch to a terminal group that participates in cooperative sensing, where
the at least one device includes at least one of at least one base station and the terminal group.

Optionally, the first preset condition includes at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;

it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;

it is determined, based on the current positioning result of the sensing target, that target spectral peak power reported by all terminals in a terminal group that is associated with at least one base station and that participates in cooperative sensing is less than a first preset value;

it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and

it is determined, based on the current positioning result and a historical positioning result of the sensing target, that a span of a trajectory physical range of the sensing target exceeds a third preset value.

Optionally, the second preset condition includes at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;

it is determined, based on a current positioning result of the sensing target, a distance between the sensing target and at least one terminal in a terminal group that participates in current cooperative sensing is greater than a second preset distance;

sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;

it is determined, based on the current positioning result of the sensing target, that a target measurement result reported by at least one terminal in the terminal group is less than a fifth preset value, target measurement being another measurement other than the target spectral peak power in measurement associated with APS measurement;

it is determined, based on the current positioning result and a historical positioning result of the sensing target, that a span of a trajectory physical range of the sensing target exceeds a sixth preset value; and

a base station that participates in cooperative sensing is switched.

Optionally, the first signal includes any one of the following:
a dedicated sensing signal, a communication-sensing integrated signal, an LTE reference signal, and an NR reference signal.

The positioning sensing method provided in the embodiments of the present invention is the method performed by the core network device in the embodiment of FIG. 4, which can implement the steps performed by the core network device and achieve the same technical effect. To avoid repetition, details are not described herein again.

An execution entity of the positioning sensing method in the embodiments of this application may be a positioning sensing apparatus. The positioning sensing apparatus provided in the embodiments of this application is described in the embodiments of this application by using an example in which the positioning sensing apparatus performs the positioning sensing method.

As shown in FIG. 8, a positioning sensing apparatus 800 provided in the embodiments of this application includes:

a measurement module 801, configured to perform azimuth power spectrum APS measurement on a sensing target, to obtain a first APS measurement result of a dynamic reflection path of a first signal, the first APS measurement result being used for determining a positioning result of the sensing target; and

an execution module 802, configured to perform a first operation or a second operation based on the first APS measurement result, where

the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

Optionally, the first sensing device includes a terminal, a network side device, or a dedicated sensing device for performing sensing measurement.

Optionally, in a case that the first sensing device is a sending device of the first signal, a receiving device of the first signal includes the terminal, the network side device, or the dedicated sensing device; or in a case that the first sensing device is a receiving device of the first signal, a sending device of the first signal includes the terminal, the network side device, or the dedicated sensing device.

Optionally, the first signal includes any one of the following:

a dedicated sensing signal, a communication-sensing integrated signal, an LTE reference signal, and an NR reference signal.

Optionally, the sending the first APS measurement result includes: sending a plurality of first APS measurement results, the plurality of first APS measurement results being used for determining a movement trajectory of the sensing target, and the plurality of first AP S measurement results being APS measurement results obtained by performing APS measurement for a plurality of times.

Optionally, the second operation performed by the execution module 802 includes:

determining a target region range;
determining a first confidence corresponding to each position coordinate in the target region range according to a target position coordinate, the first APS measurement result, and the second APS measurement result; and
determining the positioning result of the sensing target according to the first confidence, where
in a case that the first sensing device or the second sensing device includes a sending device of the first signal, the target position coordinate includes a position coordinate of the first sensing device and a position coordinate of the second sensing device; or in a case that the first sensing device and the second sensing device do not include a sending device of the first signal, the target position coordinate includes a position coordinate of the first sensing device, a position coordinate of the second sensing device, and a position coordinate of the sending device.

Optionally, the determining the positioning result of the sensing target according to the first confidence includes: determining a position coordinate in the target region range with the highest first confidence as a positioning position of a target sensing object.

Optionally, the determining a target region range includes at least one of the following:

in a case that the $1^{st}$ positioning is performed on the sensing target based on an APS measurement result, determining the target region range corresponding to the $1^{st}$ positioning based on a first preset rule; and
in a case that M* positioning is performed on the sensing target based on an APS measurement result, determining the target region range corresponding to the $M^{th}$ positioning based on an $(M-1)^{th}$ positioning result, M being an integer greater than 1.

Optionally, the first preset rule includes at least one of the following:

the target region range is a region range indicated by a core network device, the region range indicated by the core network device being determined based on first prior information of the sensing target;
the target region range is determined based on a first position, the first position being a positioning position at which at least one sensing device performs positioning on the sensing target based on an echo in a manner of self-transmitting and self-receiving a sensing signal;
in a case that the sensing target is a terminal, the target region range is determined based on a second position, the second position being a positioning position of the sensing target determined based on a new radio NR positioning method; and
the target region range is determined based on a third position, the third position being a positioning position of the sensing target determined through a global positioning system GPS, or Bluetooth, or by using an ultra-wideband UWB technology.

Optionally, the first prior information includes at least one of the following:

an initial position region in which the core network device receives a sensing target provided by another device;
a positioning position that is in the region of the sensing target and that is of last positioning in continuous positioning previously performed on the sensing target;
prestored map information and obstacle information in a sensing region;
a prestored probability map of an initial position of the sensing target in the sensing region; and
position information of a plurality of sensing devices configured to perform APS measurement on the sensing target.

Optionally, the determining a first confidence corresponding to each position coordinate in the target region range according to a target position coordinate, the first APS measurement result, and the second APS measurement result includes:

determining a reflection path angle value corresponding to the target position coordinate according to position information of a target sensing device and position information of the sending device, the target sensing device being any sensing device performing APS measurement on the sensing target, and the target position coordinate being any position coordinate in the target region range;
determining a second confidence according to the reflection path angle value, an APS measurement result corresponding to the target sensing device, and a weight coefficient corresponding to the target sensing device, the weight coefficient being used for representing a confidence of the APS measurement result corresponding to the target sensing device, and the second confidence representing a possibility that the sensing target is located in a direction of the reflection path angle value of the target sensing device; and
determining a first confidence of the target position coordinate based on the second confidence corresponding to a plurality of sensing devices performing APS measurement on the sensing target, the first confidence being positively correlated to the second confidence of each sensing device.

Optionally, weight coefficients corresponding to the same sensing device at different moments are fixed values, or weight coefficients corresponding to the same sensing device at different moments change in a preset range.

Optionally, the positioning sensing apparatus 800 further includes:
a first sending module, configured to report target information to a computing device, the target information including device information of the first sensing device, the device information of the first sensing device being used by the computing device to determine whether the first sensing device participates in cooperative sensing, and the computing device being a base station that determines to participate in cooperative sensing or a core network device.

Optionally, the target information further includes device information of at least one sensing device received by the first sensing device, the device information of the sensing device being used by the computing device to determine whether the sensing device participates in cooperative sensing.

Optionally, the positioning sensing apparatus 800 further includes:
a second determining module, configured to determine, according to received device information of a sensing device, at least some second sensing devices that participate in cooperative sensing.

Optionally, a manner for determining the at least some second sensing devices that participate in cooperative sensing includes any one of the following:

in a case that the device information includes motion state information and position information, determining, according to information about a sensing region in a sensing requirement, the motion state information, and the position information, the second sensing device that participates in cooperative sensing;
in a case that the device information includes motion state information, position information, and a position information determining method, determining, according to information about a sensing region in a sensing requirement, the motion state information, the position information, and the position information determining method, the second sensing device that participates in cooperative sensing;
in a case that device information includes motion state information, position information, and sensing capability information, determining, according to information about a sensing region in a sensing requirement, the motion state information, and the sensing capability information, the second sensing device that participates in cooperative sensing;
in a case that the device information includes motion state information, position information, communication state information, and sensing state information, determining, according to information about a sensing region in a sensing requirement, the motion state information, the position information, the communication state information, and the sensing state information, the second sensing device that participates in cooperative sensing; or

determining the second sensing device according to at least one of information about a sensing region in a sensing requirement and the device information of the sensing device.

Optionally, the device information includes at least one of the following: state information and sensing capability information.

Optionally, the state information includes at least one of the following: position information, a position information determining method, motion state information, panel orientation information, panel tilt angle information, communication state information, sensing state information, and beamforming configuration information.

Optionally, the first APS measurement result is an APS measurement result of an entire channel or an APS measurement result in a preset angle range, the preset angle range is determined by the first sensing device or indicated by a computing device, and the computing device is a base station that determines to participate in cooperative sensing or a core network device.

Optionally, the performing, by a first sensing device, azimuth power spectrum APS measurement on a sensing target, to obtain a first APS measurement result of a dynamic reflection path of a first signal includes at least one of the following:

in a case that the first sensing device is a sending device of the first signal, sending, by the first sensing device, the first signal in a beam scanning manner, receiving a first measurement result of the second sensing device based on the first signal, and determining an angle of departure APS according to the first measurement result, the first measurement result including reference signal received power RSRP measurement results corresponding to a plurality of beams; or

in a case that the first sensing device is a receiving device of the first signal, receiving, by the first sensing device, the first signal in a beam scanning manner to obtain a second measurement result, and determining an angle of arrival APS according to the second measurement result, the second measurement result including RSRP measurement results corresponding to a plurality of beams.

Optionally, the positioning sensing apparatus 800 further includes:

a switching module, configured to switch, according to a second preset rule, at least one device that participates in cooperative sensing.

Optionally, the second preset rule includes at least one of the following:

triggering, in a case that a first preset condition is met, to switch to a base station that participates in cooperative sensing; and

triggering, in a case that a second preset condition is met, to switch to a terminal group that participates in cooperative sensing, where

the at least one device includes at least one of at least one base station and the terminal group.

Optionally, the first preset condition includes at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;

it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;

it is determined, based on the current positioning result of the sensing target, that target spectral peak power reported by all terminals in a terminal group that is associated with at least one base station and that participates in cooperative sensing is less than a first preset value;

it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and

it is determined, based on the current positioning result and a historical positioning result of the sensing target, that a span of a trajectory physical range of the sensing target exceeds a third preset value.

Optionally, the second preset condition includes at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;

it is determined, based on a current positioning result of the sensing target, a distance between the sensing target and at least one terminal in a terminal group that participates in current cooperative sensing is greater than a second preset distance;

sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;

it is determined, based on the current positioning result of the sensing target, that a target measurement result reported by at least one terminal in the terminal group is less than a fifth preset value, target measurement being another measurement other than the target spectral peak power in measurement associated with APS measurement;

it is determined, based on the current positioning result and a historical positioning result of the sensing target, that a span of a trajectory physical range of the sensing target exceeds a sixth preset value; and

a base station that participates in cooperative sensing is switched.

Referring to FIG. 9, an embodiment of this application further provides another positioning sensing apparatus. As shown in FIG. 9, the positioning sensing apparatus 900 includes:

a receiving module 901, configured to receive at least two APS measurement results, each APS measurement result being an APS measurement result that is of a dynamic reflection path of a first signal and that is obtained by a sensing device by performing azimuth power spectrum APS measurement on a sensing target; and

a first determining module 902, configured to determine a positioning result of the sensing target according to the at least two APS measurement results.

Optionally, the receiving module 901 is further configured to receive device information of the sensing device; and the first determining module 902 is further configured to determine, according to the device information, whether the sensing device participates in cooperative sensing.

Optionally, a manner for determining the sensing device that participates in cooperative sensing includes at least one of the following:

in a case that the device information includes motion state information and position information, determining, according to information about a sensing region in a sensing requirement, the motion state information, and the position information, the second sensing device that participates in cooperative sensing;

in a case that the device information includes motion state information, position information, and a position information determining method, determining, according to information about a sensing region in a sensing requirement, the motion state information, the position information, and the position information determining method, the second sensing device that participates in cooperative sensing;

in a case that device information includes motion state information, position information, and sensing capability information, determining, according to information about a sensing region in a sensing requirement, the motion state information, and the sensing capability information, the second sensing device that participates in cooperative sensing;

in a case that the device information includes motion state information, position information, communication state information, and sensing state information, determining, according to information about a sensing region in a sensing requirement, the motion state information, the position information, the communication state information, and the sensing state information, the second sensing device that participates in cooperative sensing; or

determining the second sensing device according to at least one of information about a sensing region in a sensing requirement and the device information of the sensing device.

Optionally, the device information includes at least one of the following: state information and sensing capability information.

Optionally, the state information includes at least one of the following: position information, a position information determining method, motion state information, panel orientation information, panel tilt angle information, communication state information, sensing state information, and beamforming configuration information.

Optionally, the positioning sensing apparatus further includes:

a switching module, configured to switch, according to a second preset rule, at least one device that participates in cooperative sensing.

Optionally, the second preset rule includes at least one of the following:

triggering, in a case that a first preset condition is met, to switch to a base station that participates in cooperative sensing; and
triggering, in a case that a second preset condition is met, to switch to a terminal group that participates in cooperative sensing, where
the at least one device includes at least one of at least one base station and the terminal group.

Optionally, the first preset condition includes at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;
it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;
it is determined, based on the current positioning result of the sensing target, that target spectral peak power reported by all terminals in a terminal group that is associated with at least one base station and that participates in cooperative sensing is less than a first preset value;
it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and
it is determined, based on the current positioning result and a historical positioning result of the sensing target, that a span of a trajectory physical range of the sensing target exceeds a third preset value.

Optionally, the second preset condition includes at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;
it is determined, based on a current positioning result of the sensing target, a distance between the sensing target and at least one terminal in a terminal group that participates in current cooperative sensing is greater than a second preset distance;
sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;
it is determined, based on the current positioning result of the sensing target, that a target measurement result reported by at least one terminal in the terminal group is less than a fifth preset value, target measurement being another measurement other than the target spectral peak power in measurement associated with APS measurement;
it is determined, based on the current positioning result and a historical positioning result of the sensing target, that a span of a trajectory physical range of the sensing target exceeds a sixth preset value; and
a base station that participates in cooperative sensing is switched.

Optionally, the first signal includes any one of the following:
a dedicated sensing signal, a communication-sensing integrated signal, an LTE reference signal, and an NR reference signal.

The positioning sensing apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include but is not limited to a type of the terminal 11 listed above, and the another device may be a server, a network attached storage (network attached storage, NAS), or the like. This is not specifically limited in the embodiments of this application.

The positioning sensing apparatus provided in the embodiments of this application can implement the processes implemented in the method embodiments of FIG. 4 to FIG. 7 and achieve the same technical effect. To avoid repetition, details are not described herein again.

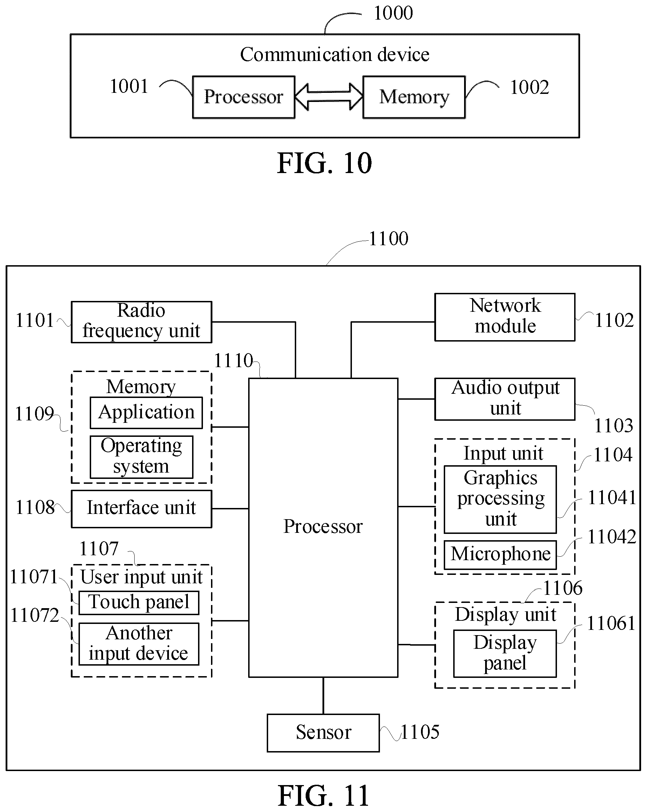

Optionally, as shown in FIG. 10, an embodiment of this application further provides a communication device 1000, including a processor 1001 and a memory 1002, the memory 1002 storing a program or instructions runnable on the processor 1001, for example, the program or instructions, when executed by the processor 1001, implementing the steps of the embodiments of the positioning sensing method, and achieving the same technical effect. To avoid repetition, details are not described herein again.

An embodiment of this application further provides a terminal, including a processor and a communication interface, where the communication interface is configured to perform azimuth power spectrum APS measurement on a sensing target, to obtain a first APS measurement result of a dynamic reflection path of a first signal, the first APS measurement result being used for determining a positioning result of the sensing target; and the processor is configured to perform a first operation or a second operation based on the first APS measurement result. The embodiment of the terminal corresponds to the embodiment of the method of the terminal side. All implementation processes of the method embodiment are applicable to the embodiment of the terminal and can achieve the same technical effects. Specifically, FIG. 11 is a schematic diagram of a hardware structure of a terminal according to an embodiment of this application.

The terminal 1100 includes, but is not limited to, at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that, the terminal 1100 may further include a power supply (such as a battery) for supplying power to the components. Preferably, the power supply may be logically connected to the processor 1110 by using a power management system, thereby implementing functions such as charging, discharging, and power consumption management by using the power management system. A terminal structure shown in FIG. 11 does not constitute a limitation to the terminal, and the terminal may include more or fewer components than those shown in the figure, or some components may be combined, or a different component deployment may be used. Details are not described herein again.

It may be understood that, in the embodiments of this application, the input unit 1104 may include a graphics processing unit (graphics processing unit, GPU) 11041 and a microphone 11042. The graphics processing unit 11041 processes image data of a static picture or a video obtained by an image capturing apparatus (for example, a camera) in a video capturing mode or an image capturing mode. The display unit 1106 may include a display panel 11061. A display panel 11061 may be configured in a form such as a liquid crystal display or an organic light-emitting diode. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include, but is not limited to, a physical keyboard, a functional key (such as a volume control key or a switch key), a track ball, a mouse, and a joystick, and the details will not be described herein again.

In this embodiment of this application, after receiving downlink data from a network side device, the radio frequency unit 1101 may transmit the data to the processor 1110 for processing. In addition, the radio frequency unit 1101 may send uplink data to the network side device. Generally, the radio frequency unit 1101 includes, but is not limited to, an antenna, an amplifier, a transceiver, a coupler, a low noise amplifier, a duplexer, and the like.

The memory 1109 may be configured to store a software program or instructions and various data. The memory 1109 may mainly include a first storage area that stores a program storage or instructions and a second storage area that stores data. The first storage area may store an operating system, an application program or instructions required by at least one function (for example, a sound playback function and an image playback function), or the like. In addition, the memory 1109 may include a volatile memory or a non-volatile memory, or the memory 1109 may include both a volatile memory and a non-volatile memory. The non-volatile memory may be a read-only memory (read-only memory, ROM), a programmable ROM (programmable ROM, PROM), an erasable programmable read-only memory (erasable PROM, EPROM), an electrically EPROM (electrically EPROM, EEPROM), or a flash memory. The volatile memory may be a random access memory (random access memory, RAM), a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synch link DRAM (synch link DRAM, SLDRAM), and a direct rambus RAM (direct rambus RAM, DRRAM). The memory 1109 in this embodiment of this application includes but is not limited to these memories and any other suitable types of memories.

The processor 1110 may include one or more processing units. Optionally, the processor 1110 integrates an application processor and a modem processor. The application processor mainly processes operations involving an operating system, a user interface, an application program, or the like. The modem processor mainly processes a wireless communication signal, for example, a baseband processor. It may be understood that the foregoing modem processor may not be integrated into the processor 1110.

The radio frequency unit 1101 performs azimuth power spectrum APS measurement on a sensing target, to obtain a first APS measurement result of a dynamic reflection path of a first signal, the first APS measurement result being used for determining a positioning result of the sensing target; and

The processor 1110 performs a first operation or a second operation based on the first APS measurement result, where

the first operation includes sending the first APS measurement result, and the second operation includes determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

In the embodiments of this application, azimuth power spectrum APS measurement is performed on a sensing target to obtain a first APS measurement result of a dynamic reflection path of a first signal, the first APS measurement result being used for determining a positioning result of the sensing target; and a first operation or a second operation is performed based on the first APS measurement result. In this way, at least two sensing devices jointly obtain an APS measurement result of the dynamic reflection path of the first signal to determine the positioning result of the sensing target, so that the sensing target can implement positioning without having a function of receiving and sending signals, thereby improving an application range of sensing positioning.

An embodiment of this application further provides a network side device, including a processor and a communication interface, where the communication interface is configured to receive at least two APS measurement results, each APS measurement result being an APS measurement result that is of a dynamic reflection path of a first signal and that is obtained by a sensing device by performing azimuth power spectrum APS measurement on a sensing target; and the processor is configured to determine a positioning result of the sensing target according to the at least two APS measurement results. The embodiment of the network side device corresponds to the method embodiment of the network side device. All implementation processes of the method embodiment are applicable to the embodiment of the network side device and can achieve the same technical effects.

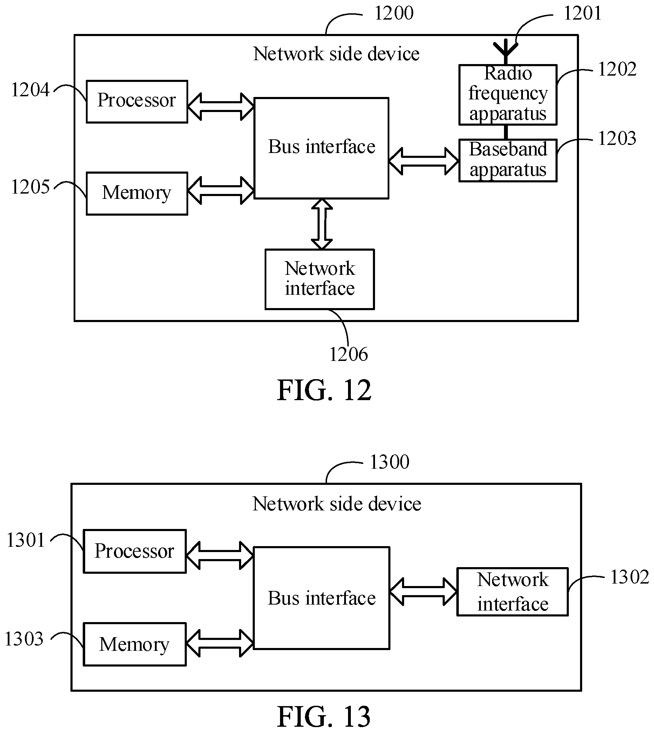

Specifically, an embodiment of this application further provides a network side device. As shown in FIG. 12, the network side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-processed information, and sends the information to the radio frequency apparatus 1202. The radio frequency apparatus 1202 processes received information and sends the information by using the antenna 1201.

In the foregoing embodiments, the method performed by the network side device may be implemented in the baseband apparatus 1203. The baseband apparatus 1203 includes a baseband processor.

The baseband apparatus 1203 may include, for example, at least one baseband plate. A plurality of chips are arranged on the baseband plate. As shown in FIG. 12, one of the plurality of chips is, for example, the baseband processor, and is connected to the memory 1205 through a bus interface, to invoke a program in the memory 1205 to perform operations performed by the network side device in the foregoing method embodiment.

The network side device may further include a network interface 1206. The interface is, for example, a common public radio interface (common public radio interface, CPRI).

Specifically, the network side device 1200 in this embodiment of the present invention further includes: instructions or a program stored in the memory 1205 and executable on the processor 1204, and the processor 1204 invokes the instructions or program in the memory 1205 to perform the method performed by the modules shown in FIG. 8 or FIG. 9, and can achieve the same technical effect. To avoid repetition, details are not described herein again.

Specifically, an embodiment of this application further provides a network side device. As shown in FIG. 13, the network side device 1300 includes a processor 1301, a network interface 1302, and a memory 1303. The network interface 1302 is, for example, a common public radio interface (common public radio interface, CPRI).

Specifically, the network side device 1300 in this embodiment of the present invention further includes: instructions or a program stored in the memory 1303 and executable on the processor 1301, and the processor 1301 invokes the instructions or program in the memory 1303 to perform the method performed by the modules shown in FIG. 9, and can achieve the same technical effect. To avoid repetition, details are not described herein again.

An embodiment of this application further provides a readable storage medium. The readable storage medium may be non-volatile or volatile. The readable storage medium stores a program or instructions, the program or instructions, when executed by a processor, implementing the processes of the embodiments of the positioning sensing method, and achieving the same technical effect. To avoid repetition, details are not described herein again.

The processor is a processor in the terminal in the foregoing embodiments. The readable storage medium includes a computer-readable storage medium, for example, a read-only memory ROM, a random access memory RAM, a magnetic disk, an optical disk, or the like.

An embodiment of this application further provides a chip, including a processor and a communication interface coupled to each other, the processor being configured to run a program or instructions to implement the processes of the embodiments of the positioning sensing method, and can achieve the same technical effects. To avoid repetition, details are not described herein again.

It may be understood that, the chip mentioned in this embodiment of this application may also be referred to as a system-level chip, a system chip, a chip system, a system on chip, or the like.

An embodiment of this application further provides a computer program product, where the computer program product is stored in a non-transitory readable storage medium, and the computer program product is configured to be executed by at least one processor to implement the processes of the embodiments of the positioning sensing method, and can achieve the same technical effects. To avoid repetition, details are not described herein again.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in the form of a computer software product. The computer software product is stored in a storage medium (such as a read-only memory (ROM)/random access memory (RAM), a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

**Claims**

1. A positioning sensing method, comprising:

   performing, by a first sensing device, azimuth power spectrum APS measurement on a sensing target, to obtain a first APS measurement result of a dynamic reflection path of a first signal, the first APS measurement result being used for determining a positioning result of the sensing target; and
   performing, by the first sensing device, a first operation or a second operation based on the first APS measurement result, wherein
   the first operation comprises sending the first APS measurement result, and the second operation comprises determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

2. The method according to claim 1, wherein the sending the first APS measurement result comprises: sending a plurality of first APS measurement results, the plurality of first APS measurement results being used for determining a movement trajectory of the sensing target, and the plurality of first APS measurement results being APS measurement results obtained by performing APS measurement for a plurality of times.

3. The method according to claim 1, wherein the determining the positioning result of the sensing target according to the first APS measurement result and at least one received second APS measurement result comprises:

determining a target region range;

determining a first confidence corresponding to each position coordinate in the target region range according to a target position coordinate, the first APS measurement result, and the second APS measurement result; and

determining the positioning result of the sensing target according to the first confidence, wherein in a case that the first sensing device or the second sensing device comprises a sending device of the first signal, the target position coordinate comprises a position coordinate of the first sensing device and a position coordinate of the second sensing device; or in a case that the first sensing device and the second sensing device do not comprise a sending device of the first signal, the target position coordinate comprises a position coordinate of the first sensing device, a position coordinate of the second sensing device, and a position coordinate of the sending device.

4. The method according to claim 3, wherein the determining the positioning result of the sensing target according to the first confidence comprises:

determining a position coordinate in the target region range with the highest first confidence as a positioning position of a target sensing object.

5. The method according to claim 3, wherein the determining a target region range comprises at least one of the following:

in a case that the 1st positioning is performed on the sensing target based on an APS measurement result, determining the target region range corresponding to the 1st positioning based on a first preset rule; and

in a case that Mth positioning is performed on the sensing target based on an APS measurement result, determining the target region range corresponding to the Mth positioning based on an (M-1)th positioning result, M being an integer greater than 1.

6. The method according to claim 5, wherein the first preset rule comprises at least one of the following:

the target region range is a region range indicated by a core network device, the region range indicated by the core network device being determined based on first prior information of the sensing target;

the target region range is determined based on a first position, the first position being a positioning position at which at least one sensing device performs positioning on the sensing target based on an echo in a manner of self-transmitting and self-receiving a sensing signal;

in a case that the sensing target is a terminal, the target region range is determined based on a second position, the second position being a positioning position of the sensing target determined based on a new radio NR positioning method; and

the target region range is determined based on a third position, the third position being a positioning position of the sensing target determined through a global positioning system GPS, or Bluetooth, or by using an ultra-wideband UWB technology.

7. The method according to claim 6, wherein the first prior information comprises at least one of the following:

an initial position region in which the core network device receives a sensing target provided by another device;

a positioning position that is in the region of the sensing target and that is of last positioning in continuous positioning previously performed on the sensing target;

prestored map information and obstacle information in a sensing region;

a prestored probability map of an initial position of the sensing target in the sensing region; and

position information of a plurality of sensing devices configured to perform APS measurement on the sensing target.

8. The method according to claim 3, wherein the determining a first confidence corresponding to each position coordinate in the target region range according to a target position coordinate, the first APS measurement result, and the second APS measurement result comprises:

determining a reflection path angle value corresponding to the target position coordinate according to position information of a target sensing device and position information of the sending device, the target sensing device being any sensing device performing APS measurement on the sensing target, and the target position coordinate being any position coordinate in the target region range;

determining a second confidence according to the reflection path angle value, an APS measurement result corresponding to the target sensing device, and a weight coefficient corresponding to the target sensing device, the weight coefficient being used for representing a confidence of the APS measurement result corresponding to the target sensing device, and the second confidence representing a possibility that the sensing target is located in a direction of the reflection path angle value of the target sensing device; and

determining a first confidence of the target position coordinate based on the second confidence corresponding to a plurality of sensing devices performing APS measurement on the sensing target, the first confidence being positively correlated to the second confidence of each sensing device.

9. The method according to claim 8, wherein weight coefficients corresponding to the same sensing device at different moments are fixed values, or weight coefficients corresponding to the same sensing device at different moments change in a preset range.

10. The method according to claim 1, wherein the first sensing device comprises a terminal, a network side device, or a dedicated sensing device for performing sensing measurement.

11. The method according to claim 10, wherein in a case that the first sensing device is a sending device of the first signal, a receiving device of the first signal comprises the terminal, the network side device, or the dedicated sensing device; or in a case that the first sensing device is a receiving device of the first signal, a sending device of the first signal comprises the terminal, the network side device, or the dedicated sensing device.

12. The method according to claim 1, wherein the first signal comprises any one of the following:
a dedicated sensing signal, a communication-sensing integrated signal, an LTE reference signal, and an NR reference signal.

13. The method according to claim 1, further comprising:
reporting, by the first sensing device, target information to a computing device, the target information comprising device information of the first sensing device, the device information of the first sensing device being used by the computing device to determine whether the first sensing device participates in cooperative sensing, and the computing device being a base station that determines to participate in cooperative sensing or a core network device.

14. The method according to claim 13, wherein the target information further comprises device information of at least one sensing device received by the first sensing device, the device information of the sensing device being used by the computing device to determine whether the sensing device participates in cooperative sensing.

15. The method according to claim 1, further comprising:
determining, by the first sensing device according to received device information of a sensing device, at least some second sensing devices that participate in cooperative sensing.

16. The method according to claim 15, wherein a manner in which the first sensing device determines the at least some second sensing devices that participate in cooperative sensing comprises any one of the following:

in a case that the device information comprises motion state information and position information, determining, according to information about a sensing region in a sensing requirement, the motion state information, and the position information, the second sensing device that participates in cooperative sensing;
in a case that the device information comprises motion state information, position information, and a position information determining method, determining, according to information about a sensing region in a sensing requirement, the motion state information, the position information, and the position information determining method, the second sensing device that participates in cooperative sensing;
in a case that device information comprises motion state information, position information, and sensing capability information, determining, according to information about a sensing region in a sensing requirement, the motion state information, and the sensing capability information, the second sensing device that participates in cooperative sensing;
in a case that the device information comprises motion state information, position information, communication state information, and sensing state information, determining, according to information about a sensing region in a sensing requirement, the motion state information, the position information, the communication state information, and the sensing state information, the second sensing device that participates in cooperative sensing; or
determining the second sensing device according to at least one of information about a sensing region in a sensing requirement and the device information of the sensing device.

17. The method according to any one of claims 13 to 15, wherein the device information comprises at least one of the following: state information and sensing capability information.

18. The method according to claim 17, wherein the state information comprises at least one of the following: position information, a position information determining method, motion state information, panel orientation information, panel tilt angle information, communication state information, sensing state information, and beamforming configuration information.

19. The method according to claim 1, wherein the first APS measurement result is an APS measurement result of an entire channel or an APS measurement result in a preset angle range, the preset angle range is determined by the first sensing device or indicated by a computing device, and the computing device is a base station that determines to participate in cooperative sensing or a core network device.

20. The method according to claim 1, wherein the performing, by a first sensing device, azimuth power spectrum APS measurement on a sensing target, to obtain a first APS measurement result of a dynamic reflection path of a first signal comprises at least one of the following:

in a case that the first sensing device is a sending device of the first signal, sending, by the first sensing device, the first signal in a beam scanning manner, receiving a first measurement result of the second sensing device based on the first signal, and determining an angle of departure APS according to the first measurement result, the first measurement result comprising reference signal received power RSRP measurement results corresponding to a plurality of beams; or
in a case that the first sensing device is a receiving device of the first signal, receiving, by the first sensing device, the first signal in a beam scanning manner to obtain a second measurement result, and determining an angle of arrival APS according to the second measurement result, the second measurement result comprising RSRP measurement results corresponding to a plurality of beams.

21. The method according to claim 1, further comprising:

switching, by the first sensing device according to a second preset rule, at least one device that participates in cooperative sensing.

22. The method according to claim 21, wherein the second preset rule comprises at least one of the following:

triggering, in a case that a first preset condition is met, to switch to a base station that participates in cooperative sensing; and
triggering, in a case that a second preset condition is met, to switch to a terminal group that participates in cooperative sensing, wherein
the at least one device comprises at least one of at least one base station and the terminal group.

23. The method according to claim 22, wherein the first preset condition comprises at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;
it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;
it is determined, based on the current positioning result of the sensing target, that target spectral peak power reported by all terminals in a terminal group that is associated with at least one base station and that participates in cooperative sensing is less than a first preset value;
it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and
it is determined, based on the current positioning result and a historical positioning result of the sensing target, that a span of a trajectory physical range of the sensing target exceeds a third preset value.

24. The method according to claim 22, wherein the second preset condition comprises at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;

it is determined, based on a current positioning result of the sensing target, a distance between the sensing target and at least one terminal in a terminal group that participates in current cooperative sensing is greater than a second preset distance;

sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;

it is determined, based on the current positioning result of the sensing target, that a target measurement result reported by at least one terminal in the terminal group is less than a fifth preset value, target measurement being another measurement other than the target spectral peak power in measurement associated with APS measurement;

it is determined, based on the current positioning result and a historical positioning result of the sensing target, that a span of a trajectory physical range of the sensing target exceeds a sixth preset value; and

a base station that participates in cooperative sensing is switched.

25. A positioning sensing method, comprising:

receiving, by a core network device, at least two APS measurement results, each APS measurement result being an APS measurement result that is of a dynamic reflection path of a first signal and that is obtained by a sensing device by performing azimuth power spectrum APS measurement on a sensing target; and

determining, by the core network device, a positioning result of the sensing target according to the at least two APS measurement results.

26. The method according to claim 25, wherein before the receiving, by a core network device, at least two APS measurement results, the method further comprises:

receiving, by the core network device, device information of the sensing device; and

determining, by the core network device according to the device information, whether the sensing device participates in cooperative sensing.

27. The method according to claim 26, wherein a manner in which the core network device determines the sensing device that participates in cooperative sensing comprises at least one of the following:

in a case that the device information comprises motion state information and position information, determining, according to information about a sensing region in a sensing requirement, the motion state information, and the position information, the second sensing device that participates in cooperative sensing;

in a case that the device information comprises motion state information, position information, and a position information determining method, determining, according to information about a sensing region in a sensing requirement, the motion state information, the position information, and the position information determining method, the second sensing device that participates in cooperative sensing;

in a case that device information comprises motion state information, position information, and sensing capability information, determining, according to information about a sensing region in a sensing requirement, the motion state information, and the sensing capability information, the second sensing device that participates in cooperative sensing;

in a case that the device information comprises motion state information, position information, communication state information, and sensing state information, determining, according to information about a sensing region in a sensing requirement, the motion state information, the position information, the communication state information, and the sensing state information, the second sensing device that participates in cooperative sensing; or

determining the second sensing device according to at least one of information about a sensing region in a sensing requirement and the device information of the sensing device.

**28.** The method according to claim 26 or 27, wherein the device information comprises at least one of the following: state information and sensing capability information.

**29.** The method according to claim 28, wherein the state information comprises at least one of the following: position information, a position information determining method, motion state information, panel orientation information, panel tilt angle information, communication state information, sensing state information, and beamforming configuration information.

**30.** The method according to claim 25, further comprising:
switching, by the core network device according to a second preset rule, at least one device that participates in cooperative sensing.

**31.** The method according to claim 30, wherein the second preset rule comprises at least one of the following:

triggering, in a case that a first preset condition is met, to switch to a base station that participates in cooperative sensing; and
triggering, in a case that a second preset condition is met, to switch to a terminal group that participates in cooperative sensing, wherein
the at least one device comprises at least one of at least one base station and the terminal group.

**32.** The method according to claim 31, wherein the first preset condition comprises at least one of the following:

it is predicted, based on the positioning result of the sensing target, that the sensing target is to leave a sensing subregion corresponding to at least one base station in base stations that participate in cooperative sensing, or it is determined, based on the positioning result of the sensing target, that the sensing target has left a sensing subregion corresponding to at least one base station in base stations that participate in cooperative sensing;
it is determined, based on a current positioning result of the sensing target, that a distance between the sensing target and at least one base station in the base stations that participate in cooperative sensing is greater than a first preset distance, and the sensing target and a remaining base station in the base stations that participate in cooperative sensing cannot provide a sensing result that meets preset sensing quality of service;
it is determined, based on the current positioning result of the sensing target, that target spectral peak power reported by all terminals in a terminal group that is associated with at least one base station and that participates in cooperative sensing is less than a first preset value;
it is determined, based on the current positioning result of the sensing target, that target measurement results reported by all terminals in the terminal group that is associated with at least one base station and that participates in cooperative sensing are less than a second preset value, target measurement being another measurement other than the target spectral peak power in measurement associated with APS measurement; and
it is determined, based on the current positioning result and a historical positioning result of the sensing target, that a span of a trajectory physical range of the sensing target exceeds a third preset value.

**33.** The method according to claim 31, wherein the second preset condition comprises at least one of the following:

it is predicted, based on the positioning result of the sensing target, that the sensing target is to leave a sensing subregion corresponding to the terminal group that participates in cooperative sensing, or it is determined, based on the positioning result of the sensing target, that the sensing target has left a sensing subregion corresponding to the terminal group that participates in cooperative sensing;
it is determined, based on a current positioning result of the sensing target, a distance between the sensing target and at least one terminal in a terminal group that participates in current cooperative sensing is greater than a second preset distance;
sensing target spectral peak power reported by at least one terminal in a terminal group that is associated with at least one base station and that participates in cooperative sensing is less than a fourth preset value, and a remaining terminal in the terminal group cannot provide a sensing result that meets preset sensing quality of service;
it is determined, based on the current positioning result of the sensing target, that a target measurement result reported by at least one terminal in the terminal group is less than a fifth preset value, target measurement being another measurement other than the target spectral peak power in measurement associated with APS measurement;
it is determined, based on the current positioning result and a historical positioning result of the sensing target, that a span of a trajectory physical range of the sensing target exceeds a sixth preset value; and
a base station that participates in cooperative sensing is switched.

**34.** The method according to claim 25, wherein the first signal comprises any one of the following:
a dedicated sensing signal, a communication-sensing integrated signal, an LTE reference signal, and an NR reference signal.

**35.** A positioning sensing apparatus, comprising:

a measurement module, configured to perform azimuth power spectrum APS measurement on a sensing target, to obtain a first APS measurement result of a dynamic reflection path of a first signal, the first APS measurement result being used for determining a positioning result of the sensing target; and
an execution module, configured to perform a first operation or a second operation based on the first APS measurement result, wherein
the first operation comprises sending the first APS measurement result, and the second operation comprises determining the positioning result of the sensing target according to the first APS measurement result and at least one received second APS measurement result, the second APS measurement result being an APS measurement result that is of the dynamic reflection path of the first signal and that is obtained by a second sensing device by performing APS measurement on the sensing target.

**36.** A positioning sensing apparatus, comprising:

a receiving module, configured to receive at least two APS measurement results, each APS measurement result being an APS measurement result that is of a dynamic reflection path of a first signal and that is obtained by a sensing device by performing azimuth power spectrum APS measurement on a sensing target; and
a first determining module, configured to determine a positioning result of the sensing target according to the at least two APS measurement results.

**37.** A terminal, comprising a processor and a memory, the memory storing a program or instructions executable on the processor, the program or instructions, when executed by processor, implementing the steps of the positioning sensing method according to any one of claims 1 to 24.

**38.** A network side device, comprising a processor and a memory, the memory storing a program or instructions executable on the processor, the program or instructions, when executed by processor, implementing the steps of the positioning sensing method according to any one of claims 1 to 34.

**39.** A readable storage medium, storing a program or instructions, the program or instructions, when executed by a processor, implementing the steps of the positioning sensing method according to any one of claims 1 to 34.

FIG. 1

FIG. 2

NG-C    Xn-C

**Base station**

Central unit

Distributed system

| Transmission point (TP) | Reception point (RP) |

Transmission reception point

Distributed system

| Transmission point (TP) | Reception point (RP) |

Transmission reception point

NR-Uu                    NR-Uu

**FIG. 3**

A first sensing device performs azimuth power spectrum APS measurement on a sensing target, to obtain a first APS measurement result of a dynamic reflection path of a first signal ⟋ 401

The first sensing device performs a first operation or a second operation based on the first APS measurement result ⟋ 402

**FIG. 4**

FIG. 5

FIG. 6

A core network device receives at least two APS measurement results, each APS measurement result being obtained by a sensing device by performing azimuth power spectrum APS measurement on a sensing target — 701

The core network device determines a positioning result of the sensing target according to the at least two APS measurement results — 702

FIG. 7

— 800

Positioning sensing apparatus

Measurement module — 801

Execution module — 802

FIG. 8

— 900

Positioning sensing apparatus

Receiving module — 901

First determining module — 902

FIG. 9

1000

## Communication device

1001  Processor ⟺ Memory  1002

## FIG. 10

1100

1101  Radio frequency unit

Network module  1102

1110

1109  Memory
Application
Operating system

1108  Interface unit

Audio output unit  1103

Input unit  1104
Graphics processing unit  11041
Microphone  11042

1107  User input unit
11071  Touch panel
11072  Another input device

Processor

1106
Display unit  11061
Display panel

Sensor  1105

## FIG. 11

1200

1201

Network side device

1204 — Processor

1202 — Radio frequency apparatus

Bus interface

1203 — Baseband apparatus

1205 — Memory

Network interface

1206

**FIG. 12**

1300

Network side device

1301 — Processor

Bus interface

1302 — Network interface

1303 — Memory

**FIG. 13**

## INTERNATIONAL SEARCH REPORT

| International application No. |
|---|
| **PCT/CN2022/140652** |

**A.    CLASSIFICATION OF SUBJECT MATTER**

H04W4/02(2018.01)i;H04W64/00(2009.01)i;G01S5/02(2010.01)i;G01S13/06(2006.01)i

According to International Patent Classification (IPC) or to both national classification and IPC

**B.    FIELDS SEARCHED**

Minimum documentation searched (classification system followed by classification symbols)

IPC:  H04W G01S

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; IEEE; 3GPP: 角度功率谱, 角功率谱, 功率角谱, 功率角度谱, 功率方位角谱, 定位, 确定, 位置, 反射径, 反射路径, angle power spectrum, angular power spectrum, power angular spectrum, power azimuth spectrum, reflect+ 3w path, positioning, determine, location, position

**C.    DOCUMENTS CONSIDERED TO BE RELEVANT**

| Category* | Citation of document, with indication, where appropriate, of the relevant passages | Relevant to claim No. |
|---|---|---|
| A | CN 110058220 A (GUANGDONG KANSHENG TECHNOLOGY CO., LTD.) 26 July 2019 (2019-07-26)<br>description, paragraphs [0079]-[0082] | 1-39 |
| A | CN 112333624 A (HUAWEI TECHNOLOGIES CO., LTD.) 05 February 2021 (2021-02-05)<br>description, paragraphs [0055] and [0106]-[0114] | 1-39 |
| A | CN 106231670 A (PEKING UNIVERSITY) 14 December 2016 (2016-12-14)<br>entire document | 1-39 |
| A | US 2020217920 A1 (TECHNISCHE UNIVERSITÄT GRAZ) 09 July 2020 (2020-07-09)<br>entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2023** | **11 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/140652**

| Patent document cited in search report | | | Publication date (day/month/year) | Patent family member(s) | | | Publication date (day/month/year) |
|---|---|---|---|---|---|---|---|
| CN | 110058220 | A | 26 July 2019 | None | | | |
| CN | 112333624 | A | 05 February 2021 | WO | 2021008581 | A1 | 21 January 2020 |
| | | | | KR | 20220031086 | A | 11 March 2022 |
| | | | | EP | 3993451 | A1 | 04 May 2022 |
| | | | | EP | 3993451 | A4 | 03 August 2022 |
| | | | | US | 2022141797 | A1 | 05 May 2022 |
| | | | | JP | 2022541463 | A | 26 September 2022 |
| CN | 106231670 | A | 14 December 2016 | CN | 106231670 | B | 02 April 2019 |
| US | 2020217920 | A1 | 09 July 2020 | EP | 3418761 | A1 | 26 December 2018 |
| | | | | EP | 3642642 | A1 | 29 April 2020 |
| | | | | WO | 2018233943 | A1 | 27 December 2018 |

Form PCT/ISA/210 (patent family annex) (July 2022)

EP 4 456 569 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111602656